# EUROPEAN PATENT APPLICATION

(11) **EP 4 819 039 A1**
(43) Date of publication of application: **07.10.2026**
(21) Application number: 24897054.3
(22) Date of filing: 25.09.2024
(51) Int. Cl.: G06T 7/20, G06T 7/00, G06V 10/774

(54) **ANALYSIS SYSTEM AND ANALYSIS PROGRAM**

(30) Priority: 01.12.2023 JP 2023203745
(71) Applicant: Hitachi, Ltd., Tokyo 100-8280 (JP)
(72) Inventor: KONG, Qian, Tokyo 100-8280 (JP); AZUMA, Kazuya, Tokyo 100-8280 (JP); WAKITA, Akihiro, Tokyo 100-8280 (JP); KAWATA, Takumi, Tokyo 100-8280 (JP); OBARA, Akira, Tokyo 100-8280 (JP); NEO, Atsushi, Tokyo 100-8280 (JP)
(74) Representative: MERH-IP Matias Erny Reichl Hoffmann Patentanwälte PartG mbB
(86) International application number: PCT/JP2024/034026
(87) International publication number: WO 2025/115364

(57) **Abstract**

An analysis system includes: a processor that executes a program; and a storage device, wherein the processor executes: an acquisition process of repeatedly acquiring an inclusive feature value that includes information pertaining to movement of a to-be-inferred subject and information pertaining to a direction of the to-be-inferred subject; a generation process by which, among a plurality of the inclusive feature values acquired repeatedly during the acquisition process, inclusive feature values from a first time to a second time are each coupled with an inclusive feature value from a third time that is a prescribed time prior, thereby generating a shift feature value group including shift feature values from the first time to the second time; and an output process of outputting the shift feature value group to an inference model that infers states of the to-be-inferred subject during a period from the first time to the second time.

## Description

### CLAIM OF PRIORITY

The present application claims priority from Japanese patent application JP 2023-203745 filed on December 1, 2023, the content of which is hereby incorporated by reference into this application.

### Technical Field

The present invention pertains to an analysis system and an analysis program that analyze data.

### Background Art

As background technology for this field, JP2020-149389A discloses a suspicious behavior detection system. The suspicious behavior detection system includes a person detection unit and an object detection unit that detect a person or an object on the basis of image information taken by a camera; a feature quantity estimation unit that estimates a feature quantity on the basis of motion information and shape information on the person detected by the person detection unit, and motion information on the object detected by the object detection unit; a steady state model preservation unit that preserves a steady state model in advance; a steady state model estimation unit that learns a feature quantity in a steady state by means of the feature quantity estimation unit and the steady state model preservation unit; an unsteady state estimation unit that determines deviation from the steady state model using the feature quantity calculated by the feature quantity estimation unit and data in the steady state model preservation unit; and an alarm unit that displays an outcome stemming from estimation of an unsteady state by the unsteady state estimation unit.

### SUMMARY OF THE INVENTION

### Problems to be Solved by the Invention

However, with the technique disclosed in Patent Document 1, in an environment with dense crowds and many obstructions, it is impossible to accurately analyze the movement of people and shape information, and it is difficult to learn or infer an unsteady state.

The present invention is made in consideration of the above problem, and an object thereof is to improve the training accuracy and inference accuracy of an inference model that infers the state of a space.

### Means for Solving the Problems

A disclosure of An analysis system comprises: a processor that executes a program; and a storage device that stores the program, wherein the processor executes: an acquisition process of repeatedly acquiring an inclusive feature value that includes information pertaining to movement of a to-be-inferred subject and information pertaining to a direction of the to-be-inferred subject; a generation process by which, among a plurality of the inclusive feature values acquired repeatedly during the acquisition process, inclusive feature values from a first time to a second time are each coupled with an inclusive feature value from a third time that is a prescribed time prior, thereby generating a shift feature value group including shift feature values from the first time to the second time; and an output process of outputting the shift feature value group generated by the generation process to an inference model that infers states of the to-be-inferred subject during a period from the first time to the second time.

### Effects of the Invention

According to a representative embodiment of the present invention, it is possible to improve the training accuracy and inference accuracy of an inferen ce model that infers the state of a space. Other objects, configurations, and ef fects than those described above are clarified by the following description of an embodiment.

### BRIEF DESCRIPTION OF THE DRAWINGS

FIG. 1 is a descriptive view showing a system configuration example of an analysis system Embodiment 1.
FIG. 2 is a block diagram for illustrating a hardware configuration example of each of computers.
FIG. 3 is a block diagram showing a functional configuration example of the analysis system according to Embodiment 1.
FIG. 4 is a descriptive view showing a generation example for the trajectory ID and the motion vector.
FIG. 5 is a descriptive view showing the speed distribution and the direction distribution.
FIG. 6 is a descriptive view showing a calculation example for the histogram feature value at the time.
FIG. 7 is a descriptive view showing a generation example for the shift feature value.
FIG. 8 is a descriptive view showing an example of a storage method for the training data.
FIG. 9 is a descriptive view showing an analysis example for a space by the analysis system.
FIG. 10 is a flowchart showing an example of detailed process steps of a training process by the server (training device) according to Embodiment 1.
FIG. 11 is a flowchart showing an example of state inference process steps by the client (inference device) according to Embodiment 1.
FIG. 12 is a flowchart showing an example of state notification process steps by the terminal (state notification device) according to Embodiment 1.
FIG. 13 is a block diagram showing a functional configuration example of the analysis system according to Embodiment 2.
FIG. 14 is a block diagram showing a functional configuration example of the analysis system according to Embodiment 3.
FIG. 15 is a flowchart showing an example of detailed process steps of a training process by the server (training device) according to Embodiment 3.
FIG. 16 is a flowchart showing an example of state inference process steps by the client (inference device) according to Embodiment 3.
FIG. 17 is a block diagram showing a functional configuration example of the analysis system according to Embodiment 4.
FIG. 18 is a descriptive view showing an example of chronological training data outputted from the training signal DB.
FIG. 19 is a block diagram showing a functional configuration example of the analysis system according to Embodiment 5.
FIG. 20 is a descriptive drawing showing one example of a shift feature value group according to Embodiment 7.
FIG. 21 is a block diagram showing a functional configuration example of the analysis system according to Embodiment 8.
FIG. 22 is a flowchart showing an example of detailed process steps of a training process by the client (training device) according to Embodiment 8.
FIG. 23 is a flowchart showing an example of state inference process steps by the client (inference device) according to Embodiment 8.

### DETAILED DESCRIPTION OF EMBODIMENTS

An embodiment according to the present invention will be described below with reference to the drawings. In all of the drawings for describing the embodiments, the same members are, as a rule, assigned the same reference characters, and redundant explanations thereof are omitted. Also, in the embodiments below, it is obvious that the constituent elements thereof (including element steps and the like) are not strictly necessary unless otherwise noted, or unless such constituent elements are clearly understood to be necessary for theoretical reasons. Additionally, it is obvious that in the case of wording such as "constituted of A," "having A," or "including A," unless explicitly noted that only the stated element is included, the wording does not exclude other elements. Similarly, in the embodiments below, when the shapes, positional relationships, and the like of the constituent elements or the like are mentioned, such mention also includes shapes that are substantially the same or similar unless otherwise explicitly mentioned, or unless there are theoretical reasons that the shapes and the like must be exactly as mentioned.

Indications such as "first," "second," "third," and the like in the present specification are for distinguishing constituent elements, and do not necessarily limit the number, order, or content thereof. Also, numbers used for identifying the constituent elements are used for each context, and a number used in a given context does not necessarily indicate the same configuration in another context. Furthermore, a constituent element identified by a given number is not prevented from additionally having a function of a constituent element identified by another number.

The positions, sizes, shapes, ranges, and the like of the components as shown in the drawings and the like are indicated for ease of understanding of the invention, and in some cases do not represent the actual positions, sizes, shapes, ranges, and the like of those components. Thus, the present invention is not necessarily limited to the positions, sizes, shapes, ranges, and the like disclosed in the drawings and the like.

### [Embodiment 1]

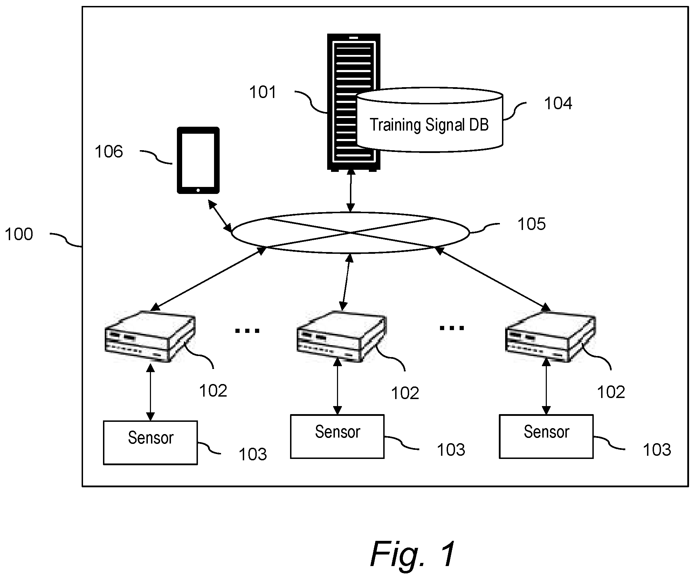

### <FIG. 1, Analysis System>

FIG. 1 is a descriptive view showing a system configuration example of an analysis system Embodiment 1. An analysis system 100 has a server 101, one or more clients 102, and a terminal 106. The server, the clients, and the terminals are connected in a manner enabling communication therebetween via a network 105 such as the internet, a LAN (local area network), or a WAN (wide area network). The server 101 is a computer that manages the clients 102. The clients 102 are computers that are connected to sensors 103, and acquire data from the sensors 103. The terminal 106 receives or transmits signals to/from the clients 102, and inputs/outputs operations and data to/from the server and the clients.

The sensors 103 detect to-be-analyzed data from an analysis environment. The sensors 103 are, for example, cameras that capture still images or video. The camera may be configured to be able to acquire depth information. The sensors 103 perform fixed-point image capture of the analysis environment. Thus, among chronological frames outputted as to-be-analyzed data from the sensors 103, for example, some subjects undergo a change in shape or size while other subjects remain the same, with unchanging shape and size between frames. Also, even among subjects that remain the same between frames, sometimes the color differs.

A training signal DB 104 is a database that retains, as a training signal, a combination of image data (also referred to as frames) that is training data of an object to be examined, and the state of the training data (correct data that indicates two or more states such as "normal" or "abnormal").

The object to be examined is a region to be subjected to state inference by fixed-point image capture, and is a region for which state inference through the behavior of persons in a space is necessary, such as the space inside a train, for example. The training signal DB 104 may be stored in the server 101, or may be connected to a computer that can communicate with the server 101 or the clients 102 via the network 105.

The analysis system 100 has a training function using the training signal DB 104, and an inference function using an inference model attained through the training function. The inference model is a learning model that infers the state of an object appearing in the image data. The training function and the inference function may be installed in either the server 101 or the clients 102 as long as the training function and the inference function are installed in the analysis system 100. A configuration may be adopted in which the training function is installed in the server 101 and the inference function is installed in the clients 102, for example. Alternatively, a configuration may be adopted in which the training function and the inference function are installed in the server 101, and the clients 102 transmit data from the sensors 103 to the server 101 and receive inference results by the inference function from the server 101.

Also, a configuration may be adopted in which the training function and the inference function are installed in the clients 102, and the server 101 manages the inference models and the inference results from the clients 102. The computer that has the training function is referred to as a training device, and the computer that has at least the inference function, among the training function and the inference function, is referred to as an inference device. FIG. 1 shows an example of a client/server type analysis system 100, but the configuration may instead by a standalone inference device. In Embodiment 1, for ease of explanation, the analysis system 100 in which the training function is installed in the server 101, and the inference function is installed in the clients 102 will be described as an example.

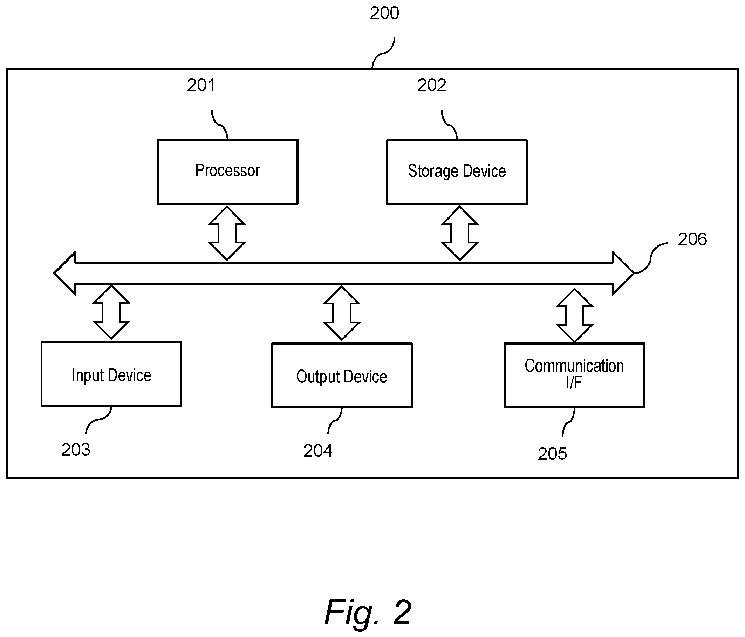

### < FIG. 2 Hardware Configuration Example of Computer>

FIG. 2 is a block diagram for illustrating a hardware configuration example of each of computers (the server 101 and the clients 102). A computer 200 includes a processor 201, a storage device 202, an input device 203, an output device 204, and a communication interface (communication IF) 205. The processor 201, the storage device 202, the input device 203, the output device 204, and the communication IF 205 are coupled to one another through a bus 206. The processor 201 is configured to control the computer 200. The storage device 202 serves as a work area for the processor 201. The storage device 202 is also a non-transitory or transitory recording medium configured to store various programs and various kinds of data. Examples of the storage device 202 include a read only memory (ROM), a random-access memory (RAM), a hard disk drive (HDD), and a flash memory. The input device 203 is configured to input data. Examples of the input device 203 include a keyboard, a mouse, a touch panel, a numeric keypad, a scanner and a sensor. The output device 204 is configured to output data. Examples of the output device 204 include a display, a printer, and a speaker. The communication IF 205 is coupled to the network 105, and is configured to transmit and receive data.

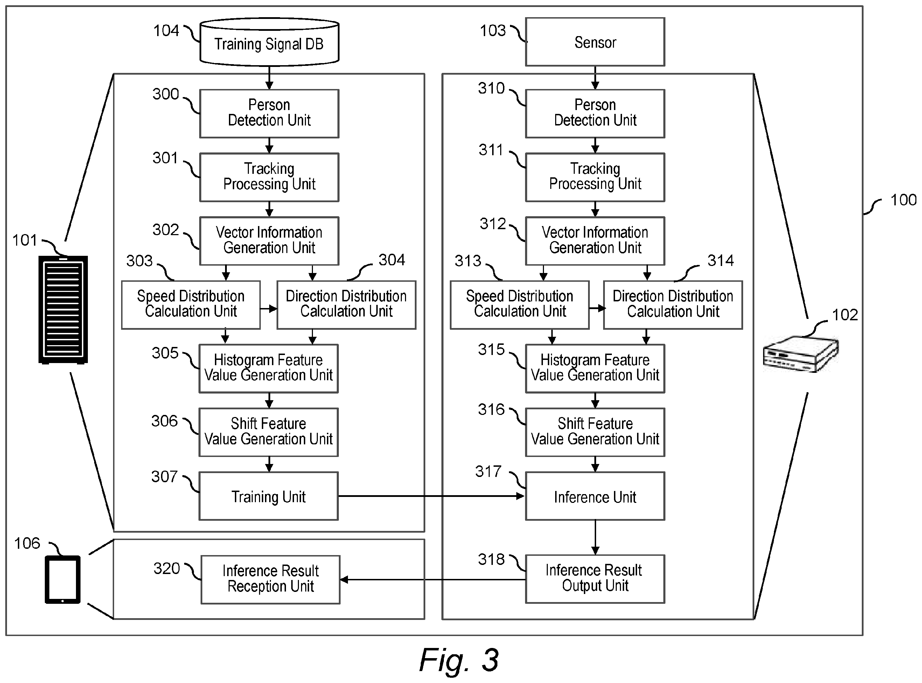

### <FIG. 3, Functional Configuration Example of Analysis System 100>

FIG. 3 is a block diagram showing a functional configuration example of the analysis system 100 according to Embodiment 1. The server 101 includes a person detection unit 300, a tracking processing unit 301, a vector information generation unit 302, a speed distribution calculation unit 303, a direction distribution calculation unit 304, a histogram feature value generation unit 305, a shift feature value generation unit 306, and a training unit 307. The client 102 includes a person detection unit 310, a tracking processing unit 311, a vector information generation unit 312, a speed distribution calculation unit 313, a direction distribution calculation unit 314, a histogram feature value generation unit 315, a shift feature value generation unit 316, an inference unit 317, and an inference result output unit 318. The terminal 106 has an inference result reception unit 320.

Such units are specifically realized by a processor 201 executing programs stored in a storage device 202 shown in FIG. 2, for example. In FIG. 3, the training signal DB 104 is located outside of the server 101, and may be realized by the storage device 202 in the server 101 or the client 102.

### <Functional Configuration Example of Server 101>

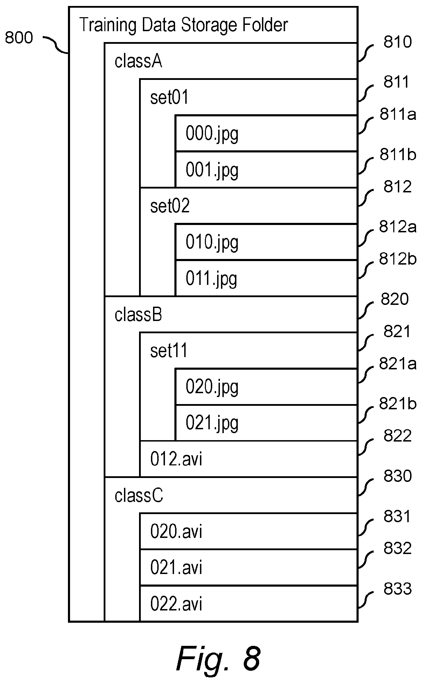

First, a functional configuration example of the server 101 will be described. The person detection unit 300 generates rectangular information R=(x1,y1,x2,y2) indicating the presence of a person in chronological training data acquired from the training signal DB 104, and outputs the center point of the rectangular information R to the tracking processing unit 301 as position coordinates O=(x,y) of the person. If multiple persons are present in the training data, a plurality of the position coordinates O are generated. x1, y1 of the rectangular information R indicate the upper left image coordinates of the rectangular information R, and x2, y2 represent the lower right image coordinates. The training signal is constituted of the training data and the state. Details of the training signal will be described with reference to FIG. 8.

The tracking processing unit 301 generates a unique trajectory ID for each person at the position coordinates O of the person acquired from the person detection unit 300. The trajectory ID of a plurality of position coordinates O derived from the same person among a plurality of acquired pieces of training data takes on the same value. The tracking processing unit 301 outputs, to the vector information generation unit 302, the trajectory ID and the position coordinates O of the person to whom the trajectory ID is assigned.

The vector information generation unit 302 generates a motion vector by the acquired trajectory ID and position coordinates O, and outputs the motion vector to the speed distribution calculation unit 303 and the direction distribution calculation unit 304.

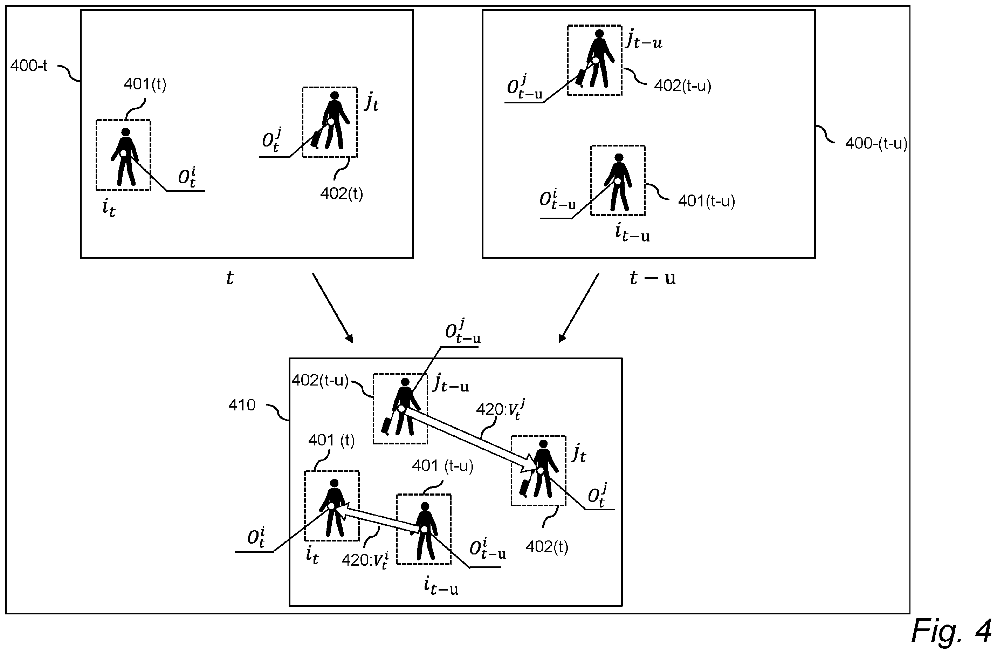

### [FIG. 4, Generation Example for Trajectory ID and Motion Vector]

FIG. 4 is a descriptive view showing a generation example for the trajectory ID and the motion vector. A reference character 400-t is the (t)th acquired piece of image data (frame) as the training data. In FIG. 4, reference characters 401(t), 402(t), 401(t-u), and 402(t-u) are rectangular information R encompassing the image data of persons, but for ease of description, the foregoing are referred to as person 401(t), 402(t), 401(t-u), and 402(t-u).

The person detection unit 300 detects the person 401(t) and the person 402(t), and outputs the respective position coordinates O thereof to the tracking processing unit 301. The frame 400-(t-u) is the (t-u)th acquired piece of image data). The person detection unit 300 detects the person 401(t-u) and the person 402(t-u), and outputs the respective position coordinates O thereof to the tracking processing unit 301.

The tracking processing unit 301 assigns the same trajectory ID to the same person among the persons detected in the frames 400-t and 400-(t-u) acquired at t-u. For example, the tracking processing unit 301 recognizes the person 401(t) and the person 401(t-u) to be the same person, and to enable distinction as to the time at which the person was detected, the person 401(t) is assigned a trajectory ID of iₜ indicating the time t ((t)th acquired frame 400-t), and assigns a trajectory ID of iₜ₋ᵤ indicating the time t-u ((t-u)th acquired frame 400-(t-u)) to the person 401(t-u).

Similarly, the tracking processing unit 301 recognizes the person 402(t) and the person 402(t-u) to be the same person, and to enable distinction as to the time at which the person was detected, the person 402(t) is assigned a trajectory ID of jₜ indicating the time t ((t)th acquired frame 400-t), and assigns a trajectory ID of jₜ₋ᵤ indicating the time t-u ((t-u)th acquired frame 400-(t-u)) to the person 402(t-u).

Also, in the frame 400-t, the position coordinates O for the person 401(t) are represented as Oⁱₜ=(xⁱₜ,yⁱₜ), and in the frame 400-(t-u), the position coordinates O for the person 401(t-u) are represented as Oⁱₜ₋ᵤ=(xⁱₜ₋ᵤ,yⁱₜ₋ᵤ).

Similarly, in the frame 400-t, the position coordinates O for the person 402(t) are represented as O^{j}ₜ=(x^{j}ₜ,y^{j}ₜ), and in the frame 400-(t-u), the position coordinates O for the person 402(t-u) are represented as O^{j}ₜ₋ᵤ=(x^{j}ₜ₋ᵤ,y^{j}ₜ₋ᵤ).

The tracking processing unit 301 may use recognition processing as an identification method for a person in different frames or may use tracking processing according to the degree of movement between frames by Kalman filtering, and there is no limitation on the person identification method to be employed by the tracking processing unit 301. Also, there is no limitation on the specific values of t and u indicating the order of acquisition of frames on which tracking processing is to be performed. However, the greater the value of u is, the greater the degree of deterioration in accuracy of tracking processing between frames is considered to be, and thus, it is preferable that a smaller value than initially set be used.

A combined frame 410 is image data in which the frame 400-t and the frame 400-(t-u) are superimposed. The vector information generation unit 302 generates a motion vector Vⁱₜ in the combined frame 410 as the motion vector 420 of the person 401(t) using the position coordinate Oⁱₜ of the person 401(t) in the frame 400-t and the position coordinate Oⁱₜ₋ᵤ of the person 401(t-u) in the frame 400-(t-u).

Similarly, the vector information generation unit 302 generates a motion vector V^{j}ₜ in the combined frame 410 as the motion vector 420 of the person 402(t) using the position coordinate O^{j}ₜ of the person 402(t) in the frame 400-t and the position coordinate O^{j}ₜ₋ᵤ of the person 402(t-u) in the frame 400-(t-u).

Here, the general formulas of the motion vector Vⁱₜ will be defined. Using the coordinates of the rectangular information R, the speed nⁱₜ and the direction dⁱₜ are defined by the following equations (1) and (2). The motion vector Vⁱₜ is defined by the following equation (3).${n}_{t}^{i} = \sqrt{{\left({x}_{t}^{i}-{x}_{t - u}^{i}\right)}^{2} + {\left({y}_{t}^{i}-{y}_{t - u}^{i}\right)}^{2}}$ (1) ${d}_{t}^{i} = {tan}^{- 1} \frac{{y}_{t}^{i} - {y}_{t - u}^{i}}{{x}_{t}^{i} - {x}_{t - u}^{i}}$ (2) ${V}_{t}^{i} = \left({n}_{t}^{i}, {d}_{t}^{i}\right)$ (3)

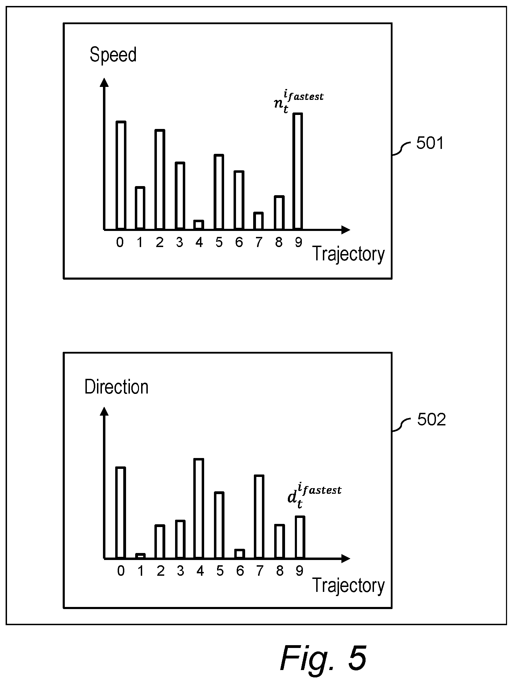

Next, the description returns to FIG. 3. The speed distribution calculation unit 303 calculates a fastest speed nⁱₜ^{fastest} in the training data at each time from the acquired motion vector Vⁱt, the motion vector Vⁱₜ^{fastest} with the fastest speed nⁱₜ^{fastest}, and a speed distribution 501 (mentioned below with reference to FIG. 5) of all persons assigned trajectory IDs, and outputs the foregoing to the histogram feature value generation unit 305. The speed distribution calculation unit 303 outputs the motion vector Vⁱₜ^{fastest} to the direction distribution calculation unit 304.

The direction distribution calculation unit 304 calculates a direction distribution 502 (mentioned below with reference to FIG. 5) of all persons assigned trajectory IDs, and a direction dⁱₜ^{fastest} of the motion vector Vⁱₜ^{fastest} with the fastest speed nⁱₜ^{fastest} on the basis of the motion vector Vⁱₜ acquired from the vector information generation unit 302, and the motion vector Vⁱₜ^{fastest} with the fastest speed nⁱₜ^{fastest} acquired from the speed distribution calculation unit 303, and outputs the calculated values to the histogram feature value generation unit 305.

### [FIG. 5, Speed Distribution 501 and Direction Distribution 502]

FIG. 5 is a descriptive view showing the speed distribution 501 and the direction distribution 502. The speed distribution 501 is a histogram in which the horizontal axis is the trajectory ID and the vertical axis is the speed nⁱₜ. The speed distribution 501 exists for each time t. The direction distribution 502 is a histogram in which the horizontal axis is the trajectory ID and the vertical axis is the direction dⁱₜ. The direction distribution 502 also exists for each time t.

In the speed distribution 501, the trajectory ID with the fastest speed nⁱₜ^{fastest} is "9". In the direction distribution 502, the direction dⁱₜ with the trajectory ID of 9 is the direction dⁱₜ^{fastest} with the fastest speed nⁱₜ^{fastest}.

Next, the description returns to FIG. 3. The histogram feature value generation unit 305 calculates a histogram feature value Hₜ pertaining to the speed nⁱₜ and the direction dⁱₜ for the speed distribution 501 and the direction distribution 502 of persons in each acquired frame 400-t.

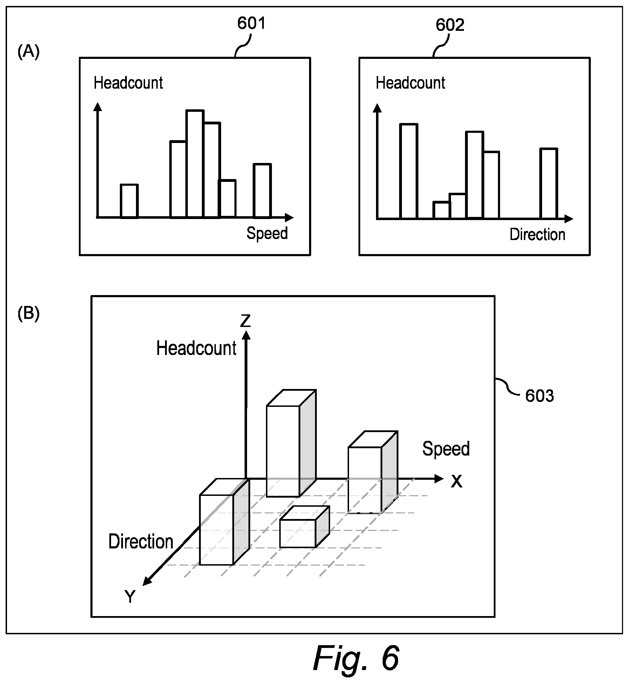

### [FIG. 6, Histogram Feature Value Hₜ]

FIG. 6 is a descriptive view showing a calculation example for the histogram feature value Hₜ at the time t. In FIG. 6, a first one-dimensional histogram 601 is a one-dimensional histogram in which the horizontal axis is the speed nⁱₜ and the vertical axis is the headcount for persons. A second one-dimensional histogram 602 is a one-dimensional histogram in which the horizontal axis is the direction dⁱₜ and the vertical axis is the headcount for persons. A two-dimensional histogram 603 is a two-dimensional histogram in which the x axis is the speed nⁱₜ, the y axis is the direction dⁱₜ, and the z axis is the headcount. The first one-dimensional histogram 601, the second one-dimensional histogram 602, and the two-dimensional histogram 603 are generated by the histogram feature value generation unit 305.

The combination of the headcount for each speed nⁱₜ in the first one-dimensional histogram 601 of the speed nⁱₜ, and the headcount for each direction dⁱₜ in the second one-dimensional histogram 602 of the direction dⁱₜ is referred to as a one-dimensional histogram feature value H1ₜ at the time t. The headcount for each combination of the speed nⁱₜ and the direction dⁱₜ in the two-dimensional histogram 603 of the speed nⁱₜ and the direction dⁱₜ is referred to as a two-dimensional histogram feature value H2ₜ at the time t. If not distinguishing between the one-dimensional histogram feature value H1ₜ and the two-dimensional histogram feature value H2ₜ, the foregoing are collectively referred to as the histogram feature value Hₜ.

The histogram feature value generation unit 305 outputs, to the shift feature value generation unit 306, the histogram feature value Hₜ, and the fastest speed nⁱₜ^{fastest} and the direction dⁱₜ^{fastest} of the motion vector Vⁱₜ^{fastest} with the fastest speed nⁱₜ^{fastest} in each frame 400-t as inclusive feature values.

Next, the description returns to FIG. 3. For the inclusive feature values of each acquired frame 400-t, the shift feature value generation unit 306 couples the inclusive feature values of the frame 400-t with the inclusive feature values of a past frame that is a prescribed number of frames prior to the frame 400-t, and outputs the coupled inclusive feature values as a shift feature value to the training unit 307. By applying the shift feature value in training, it is possible to avoid entry of a few types of states when determining the continuous state of a space per unit frame. Specifically, for example, in a 10fps video, it is unlikely for the situation inside a train to change at the frame level (per 0.1s) and it is anticipated that changes in the situation occur in a cluster over a given period of time. However, with only the inclusive feature values of the frame 400-t, there is a possibility that sporadic erroneous determinations occur. Therefore, by generating a shift feature value by coupling the inclusive feature values of a past frame that is a prescribed number of frames prior to the current frame, it is possible to mitigate such sporadic erroneous determinations.

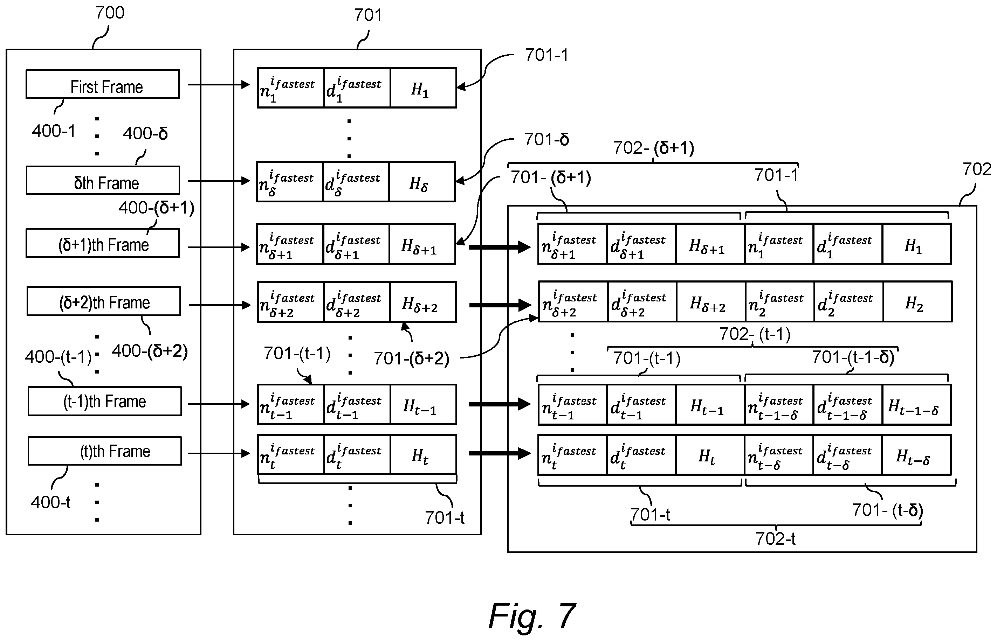

### [FIG. 7, Shift Feature Value]

FIG. 7 is a descriptive view showing a generation example for the shift feature value. A chronological training data group 700 is constituted of a plurality of chronological frames, and specifically a first frame 400-1, ...a δth frame 400-δ, a (δ+1)th frame 400-(δ+1), a (δ+2)th frame 400-(δ+2), ...a (t-1)th frame 400-(t-1), and a (t)th frame 400-t, for example. δ<t is a non-negative integer.

An inclusive feature value group 701 is a collection of inclusive feature values 701-1 to 701-t for each frame of the chronological training data group 700.

A shift feature value group 702 is a collection of shift feature values 702-(δ+1) to 702-t generated by the shift feature value generation unit 306 and accumulated chronologically. The shift feature value generation unit 306 uses the inclusive feature values 701-(δ+1) to 701-t of the frames 400-(δ+1) to 400-t, and the inclusive feature values 701-1 to 701-(t-δ) of the frames 400-1 to 400-(t-δ) that are δ frames prior thereto, in order to generate the shift feature values 701-(δ+1) to 702-t of the frames 400-(δ+1) to 400-t. There is no specific limitation on the value of δ.

For example, the inclusive feature value 701-t generated from the (t)th frame 400-t is constituted of the fastest speed nⁱₜ^{fastest}, the direction dⁱₜ^{fastest} of the motion vector Vⁱₜ^{fastest} with the fastest speed nⁱₜ^{fastest}, and the histogram feature value Ht.

Similarly, the inclusive feature value 701-(t-δ) of the (t-δ)-th frame 400-(t-δ) is constituted of the fastest speed nⁱ_{t-δ}^{fastest}, the direction dⁱ_{t-δ}^{fastest} of the motion vector Vⁱ_{t-δ}^{fastest} with the fastest speed nⁱ_{t-δ}^{fastest}, and the histogram feature value H_{t-δ}.

Thus, the shift feature value 702-t generated from the (t)th frame 400-t is constituted of the fastest speed nⁱₜ^{fastest}, the direction dⁱₜ^{fastest} of the motion vector Vⁱₜ^{fastest} with the fastest speed nⁱₜ^{fastest}, and the histogram feature value Ht of the (t)th frame 400-t; and the fastest speed nⁱ_{t-δ}^{fastest}, the direction dⁱ_{t-δ}^{fastest} of the motion vector Vⁱ_{t-δ}^{fastest} with the fastest speed nⁱ_{t-δ}^{fastest}, and the histogram feature value H_{t-δ} of the (t-δ)th frame. However, there is no past frame that is δ frames prior for frames 400-1 to 400-δ where t is equal to 1 to δ, and thus, the generation process for the shift feature value is executed for the (δ+1)th frame 400-(δ+1) onward.

Next, the description returns to FIG. 3. The training unit 307 performs training, with the acquired shift feature value group 702 as the predictor variable and the state of the training data that is the frames 400-(δ+1) to 400-t as the response variable, and generates through machine learning an inference model that infers the state of subjects (persons) in the frames 400-(δ+1) to 400-t using the shift feature value group 702. The training unit 307 outputs the inference model generated by training to the inference unit 317.

### <Functional Configuration Example of Client 102>

Next, a functional configuration example of the client 102 will be described. The person detection unit 310 acquires to-be-analyzed data from the sensor 103, detects a person from the to-be-analyzed data using results of learning information of the person performed through machine learning in advance, generates rectangular information R=(x1,y1,x2,y2) indicating the presence of a person, and outputs the center point of the rectangular information R to the tracking processing unit 311 as position coordinates O=(x,y) of the person.

The frame 400-t as the training data in the training signal DB 104 differs in time and image data from the frame acquired from the sensor 103 as to-be-analyzed data, but for ease of explanation, "t" is used as the reference character for time and "400" is used as the reference character for the frames for the client 102 as well.

The tracking processing unit 311 generates a unique trajectory ID for each person at the position coordinates O of the person acquired from the person detection unit 310. The trajectory ID of a plurality of position coordinates O derived from the same person among a plurality of acquired pieces of training data takes on the same value. The tracking processing unit 301 outputs, to the vector information generation unit 312, the trajectory ID and the position coordinates O of the person to whom the trajectory ID is assigned.

The vector information generation unit 312 generates a motion vector 420 by the acquired trajectory ID and position coordinates O, and outputs the motion vector 420 to the speed distribution calculation unit 313 and the direction distribution calculation unit 314.

The speed distribution calculation unit 313 calculates a fastest speed nⁱₜ^{fastest} in the frame 400-t at each time t from the acquired motion vector Vⁱt, the motion vector Vⁱₜ^{fastest} with the fastest speed nⁱₜ^{fastest}, and a speed distribution 501 of all persons assigned trajectory IDs, and outputs the foregoing to the histogram feature value generation unit 315. The speed distribution calculation unit 313 outputs the motion vector Vⁱₜ^{fastest} to the direction distribution calculation unit 314.

The direction distribution calculation unit 314 calculates a direction distribution 502 of all persons assigned trajectory IDs, and a direction dⁱₜ^{fastest} of the motion vector Vⁱₜ^{fastest} with the fastest speed nⁱₜ^{fastest} on the basis of the motion vector Vⁱₜ acquired from the vector information generation unit 312, and the motion vector Vⁱₜ^{fastest} with the fastest speed nⁱₜ^{fastest} acquired from the speed distribution calculation unit 313, and outputs the calculated values to the histogram feature value generation unit 315.

The histogram feature value generation unit 315 calculates a histogram feature value Ht pertaining to the speed nⁱₜ and the direction dⁱₜ for the speed distribution 501 and the direction distribution 502 of persons in each acquired frame 400-t. The histogram feature value generation unit 315 outputs, to the shift feature value generation unit 316, the histogram feature value Hₜ, and the fastest speed nⁱₜ^{fastest} and the direction dⁱₜ^{fastest} of the motion vector Vⁱₜ^{fastest} with the fastest speed nⁱₜ^{fastest} in each frame 400-t as inclusive feature values.

For the inclusive feature values 701-t of each acquired frame 400-t, the shift feature value generation unit 316 couples the inclusive feature values 701-t of the frame 400-t with the inclusive feature values 701-(t-δ) of a past frame that is δ frames prior to the time t, and outputs the coupled inclusive feature values as a shift feature value 702-t to the inference unit 317.

For example, the shift feature value of the (t)th frame 400-t acquired as the to-be-analyzed data from the sensor 103 is constituted of the fastest speed nⁱₜ^{fastest}, the direction dⁱₜ^{fastest} of the motion vector Vⁱₜ^{fastest} with the fastest speed nⁱₜ^{fastest}, and the histogram feature value Ht of the (t)th frame 400-t; and the fastest speed nⁱ_{t-δ}^{fastest}, the direction dⁱ_{t-δ}^{fastest} of the motion vector Vⁱ_{t-δ}^{fastest} with the fastest speed nⁱ_{t-δ}^{fastest}, and the histogram feature value H_{t-δ} of the (t-δ)th frame 400-(t-δ). However, there is no past frame that is δ frames prior for frames 400-1 to 400-δ where t is equal to 1 to δ, and thus, the generation process for the shift feature value 702-t is executed for the (δ+1)th frame 400-(δ+1) onward.

The inference unit 317 inputs, to the inference model acquired from the training unit 307, the acquired shift feature value group 702 that includes the shift feature value 702-(δ+1) at the time (δ+1) to the shift feature value 702-t at the time t, and infers the state of a subject (person) in the frames 400-(δ+1) to 400-t using the shift feature value group 702. The inference unit 317 outputs the inference result to the inference result output unit 318.

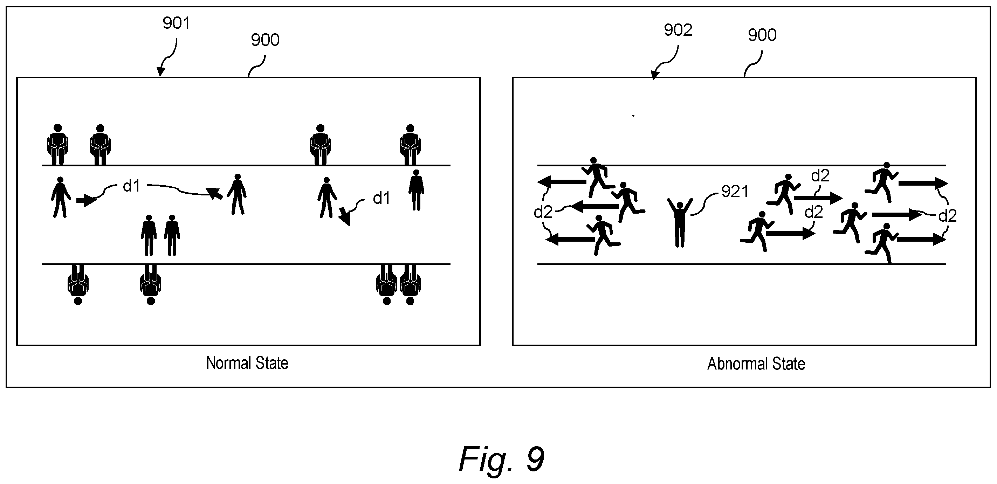

If the inference result acquired from the inference unit 317 is a predetermined inference result, then the inference result output unit 318 transmits the inference result to the inference result reception unit 320 in the terminal 106. Here, the predetermined inference result refers to a state in which it is necessary to make additional controls according to the normal or abnormal state such as that shown in FIG. 9, and through transmission of the predetermined inference result, it is possible to perform the necessary controls.

### <Functional Configuration Example of Terminal 106>

Next, a functional configuration example of the terminal 106 will be described. The inference result reception unit 320 indicates whether the state is one in which additional control is necessary according to the inference result received from the inference result output unit 318.

### <FIG. 8, Storage Method for Training Data>

FIG. 8 is a descriptive view showing an example of a storage method for the training data. The training data is stored in a training signal storage folder 800 of the training signal DB 104. The training signal storage folder 800 has a first subfolder 810, a second subfolder 820, and a third subfolder 830.

The first subfolder 810 has stored therein a subfolder 811 and a subfolder 812. The subfolder 811 has stored therein image data of 000.jpg 811a and image data of 001.jpg 811b. The subfolder 812 has stored therein image data of 010.jpg 812b and image data of 011.jpg 812b.

The second subfolder 820 has stored therein a subfolder 821 and image data of 012.avi 822. The subfolder 821 has stored therein image data of 020.jpg 821a and image data of 021.jpg 821b.

The third subfolder 830 has stored therein image data of 020.avi 831, image data of 021.avi 832, and image data of 022.avi 833.

The chronological image data is stored by state in the first subfolder 810, the second subfolder 820, and the third subfolder 830. The state is set as the name of each subfolder. Specifically, for example, the state of the first subfolder 810 is "classA", the state of the second subfolder 820 is "classB", and the state of the third subfolder 830 is "classC". Collections of image data belonging to different chronologies within the state subfolder are stored in the subfolder 811, the subfolder 812, and the subfolder 821. The collection is set as the name of each subfolder. Specifically, for example, the collection of the subfolder 811 is "set01", the collection of the subfolder 812 is "set02", and the collection of the subfolder 821 is "set11".

In FIG. 8, the number of subfolders distinguished by state is three, but may be any number of two or greater. Also, the number of pieces of image data and the number of subfolders in the first subfolder 810, the second subfolder 820, and the third subfolder 830 are not limited to the example of FIG. 8.

The person detection unit 300 shown in FIG. 3 acquires the chronological image data grouped in each subfolder together with the subfolder names indicating the states, and uses the foregoing for training. If training the inference model for each class, for example, then by designating the subfolder, the server 101 can acquire the image data in the subfolder and input the image data to the inference model, compare the output result thereof to the subfolder name indicating the state, calculate the value of a loss function on the basis of the comparison result (match or non-match), and perform backpropagation, thereby enabling training of the inference model.

If a new training signal is added to the training signal storage folder 800, the server 101 searches for the training signal storage folder 800 in a state within the training signal to be added, thereby identifying the destination subfolder and storing therein the image data to be added. Thus, generation and management of training signals is simplified.

### <FIG. 9, Analysis Example for Space by Analysis System>

FIG. 9 is a descriptive view showing an analysis example for a space by the analysis system. Images 901 and 902 are images displayed on the basis of image data captured by the sensor 103. The image 901 indicates a state within a train car of a space 900 in which persons are present. In the space 900 indicated by the image 901, there are specific trends in the movements of the persons such as "persons remain still," "persons moving slowly in a given direction," "persons are uniformly distributed in the space," or "persons are concentrated in a specific location." The analysis system 100 can be set so as to determine that such a state in which persons move according to a specific trend is a normal state. The movement trends of persons can differ depending on the location or according to the time of day or other conditions.

The movement trends of persons can dynamically change due to an event that occurs suddenly (sudden event). Examples of such an event include incidents or accidents that pose a threat of bodily harm, or from which persons may wish to move away. Incidents include the appearance of a violent individual, the discovery of a suspicious object, or the occurrence of vomiting, for example. Accidents include vehicle malfunctions and the like.

The image 902 in FIG. 9 indicates a state in which the movement trends of persons are changing due to the occurrence of a sudden event in the space 900 shown in the image 901. If a sudden event occurs, then as shown in the image 902, persons move in directions d2 differing from directions d1 shown in the image 901 so as to move away from an occurrence source 921 of the sudden event. The directions d2 indicate the lengthwise direction of the train car. That is, the persons move along the directions d2 in order to move to an adjacent car. Such a trend continues as long as the sudden event is occurring in the space 900. The analysis system 100 determines that such a state in which persons move according to a trend differing from the normal state is an abnormal state.

The analysis system 100 can determine whether the space 900 is in a normal state or an abnormal state according to the movement trends of persons in the space 900. Also, if the analysis system 100 determines that an abnormal state is occurring, the analysis system 100 can identify the movement direction of the persons, and identify the occurrence source of the sudden event that has caused the abnormal state using information such as the concentration of persons. According to the analysis system 100, a system manager can ascertain the occurrence of a sudden event in the space 900 and protect the safety of persons in the space 900, and can quickly resolve the sudden event, for example.

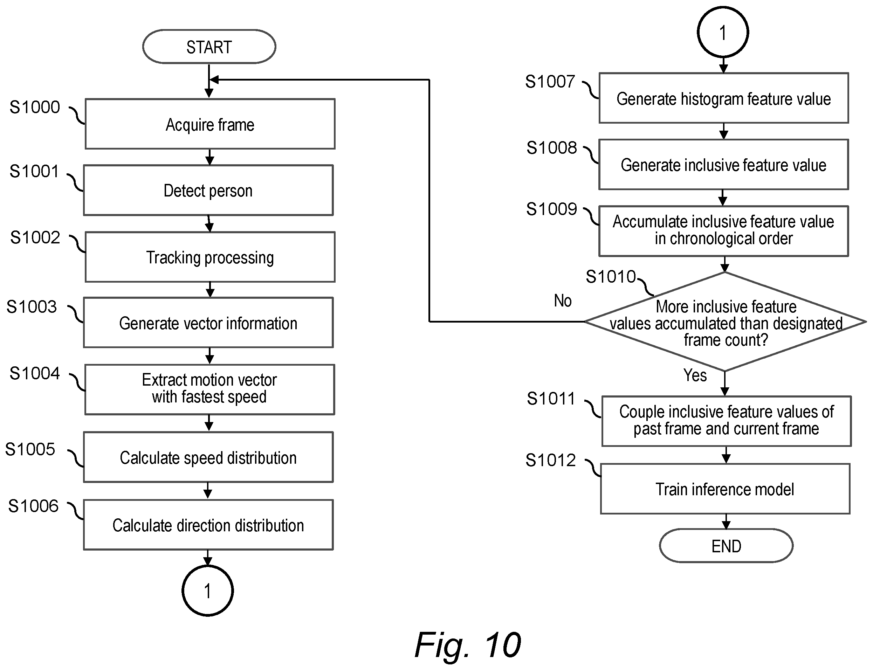

### <FIG. 10, Training Process>

FIG. 10 is a flowchart showing an example of detailed process steps of a training process by the server 101 (training device) according to Embodiment 1.

### (Step S1000)

The server 101 uses the person detection unit 300 to acquire a training signal used for training from the training signal DB 104.

### (Step S1001)

Next, the server 101 uses the person detection unit 300 to detect persons from the acquired training signal used for training, and calculates the position coordinates O of persons in each frame.

### (Step S1002)

Next, the server 101 uses the tracking processing unit 301 to assign a trajectory ID to the acquired position coordinates O of the persons. The trajectory ID of a plurality of position coordinates O derived from the same person among the plurality of acquired frames is set to the same value.

### (Step S1003)

Next, the server 101 uses the vector information generation unit 302 to calculate the motion vector 420 in each frame of a person assigned the trajectory ID. The motion vector 420 includes the speed nⁱₜ and the direction dⁱₜ.

### (Step S1004)

Next, the server 101 uses the speed distribution calculation unit 303 to identify the motion vector Vⁱₜ^{fastest} in which the speed nⁱₜ in each frame is the fastest, and acquires the fastest speed nⁱₜ in each frame. Also, using the direction distribution calculation unit 304, the direction dⁱₜ^{fastest} of the motion vector Vⁱₜ^{fastest} with the fastest speed nⁱₜ is acquired.

### (Step S1005)

Next, the server 101 uses the speed distribution calculation unit 303 to calculate the speed distribution 501 of the persons assigned the trajectory IDs.

### (Step S1006)

Next, the server 101 uses the direction distribution calculation unit 304 to calculate the direction distribution 502 of the persons assigned the trajectory IDs.

### (Step S1007)

Next, the server 101 uses the histogram feature value generation unit 305 to generate the histogram feature value Hₜ pertaining to the speed nⁱₜ and the direction dⁱₜ for each frame, using the acquired speed distribution 501 and direction distribution 502.

### (Step S1008)

Next, the server 101 uses the histogram feature value generation unit 305 to generate the inclusive feature value 701-t of each frame using the histogram feature value Hₜ, the fastest speed nⁱₜ^{fastest}, and the direction dⁱₜ^{fastest} of the motion vector Vⁱₜ^{fastest} with the fastest speed nⁱₜ^{fastest} in each frame.

### (Step S1009)

Next, the server 101 uses the shift feature value generation unit 306 to accumulate in chronological order the inclusive feature values 701-t of each acquired frame.

### (Step S1010)

Next, the server 101 uses the shift feature value generation unit 306 to determine whether the accumulated inclusive feature values 701-t have exceeded the preset number of frames δ. If the accumulated inclusive feature values 701-t have not exceeded the preset number of frames δ (step S1010: No), then the process returns to step S1000. On the other hand, if the accumulated inclusive feature values 701-t have exceeded the preset number of frames δ (step S1010: Yes), then the process progresses to step S1011.

### (Step S1011)

Next, the server 101 uses the shift feature value generation unit 306 to couple the inclusive feature values 701-t with the inclusive feature values 701-(t-δ) of past frames that are δ frames prior to the preset number of frames for each of the accumulated inclusive feature values 701-t, thereby generating the shift feature value 702-t.

### (Step S1012)

Next, the server 101 uses the training unit 307 to perform training, with the shift feature value 702-t corresponding to the frame 400-t as the predictor variable and the state corresponding to the frame 400-t as the response variable, and generates through machine learning an inference model that infers the state of subjects (persons) in the frames 400-(δ+1) to 400-t using the shift feature value group 702.

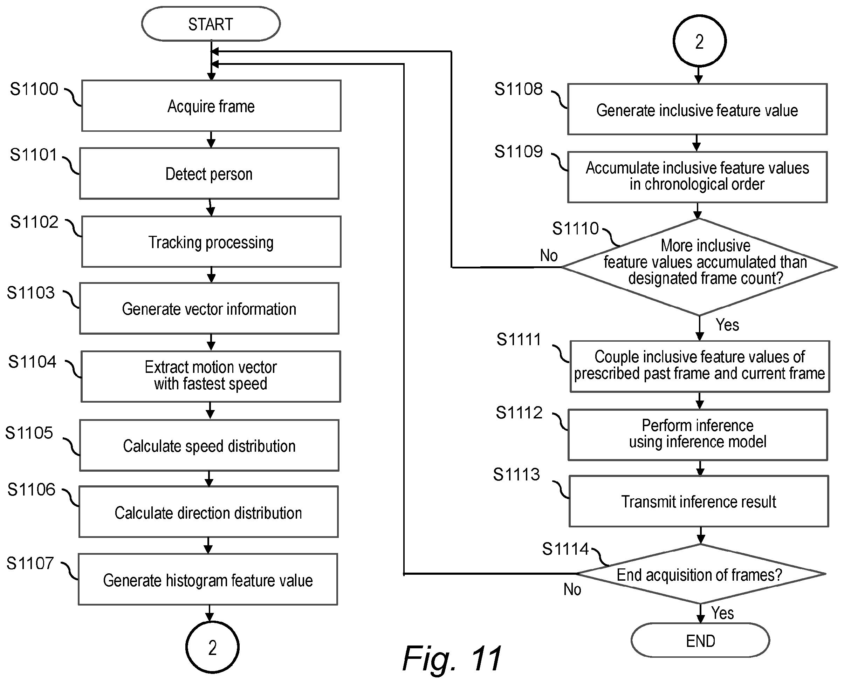

### <FIG. 11, Inference Process>

FIG. 11 is a flowchart showing an example of state inference process steps by the client 102 (inference device) according to Embodiment 1.

### (Step S1100)

The client 102 acquires the current frame from the sensor 103 using the person detection unit 310.

### (Step S1101)

Next, the client 102 uses the person detection unit 310 to detect persons from the acquired current frame, and calculates the position coordinates O of each person.

### (Step S1102)

Next, the client 102 uses the tracking processing unit 311 to assign a trajectory ID to the acquired position coordinates O of the persons. The trajectory ID of a plurality of position coordinates O derived from the same person among the plurality of acquired frames is set to the same value.

### (Step S1103)

Next, the client 102 uses the vector information generation unit 312 to calculate the motion vector 420 of a person assigned the trajectory ID. The motion vector 420 includes the speed nⁱₜ and the direction dⁱₜ.

### (Step S1104)

Next, the client 102 uses the speed distribution calculation unit 313 to identify the motion vector Vⁱₜ^{fastest} with the fastest speed nⁱₜ from the motion vectors 420 acquired from the vector information generation unit 312, and acquire the fastest speed nⁱₜ. Also, using the direction distribution calculation unit 304, the direction dⁱₜ^{fastest} of the motion vector Vⁱₜ^{fastest} with the fastest speed nⁱₜ is acquired.

### (Step S1105)

Next, the client 102 uses the speed distribution calculation unit 313 to calculate the speed distribution 501 of the persons assigned the trajectory IDs.

### (Step S1106)

Next, the client 102 uses direction distribution calculation unit 314 to calculate the direction distribution 502 of the persons assigned the trajectory IDs.

### (Step S1107)

Next, the client 102 uses the histogram feature value generation unit 315 to generate the histogram feature value Ht pertaining to the speed nⁱₜ and the direction d't, using the acquired speed distribution 501 and direction distribution 502.

### (Step S1108)

Next, the client 102 uses the histogram feature value generation unit 315 to generate the inclusive feature value 701-t of the current frame using the histogram feature value Ht, the fastest speed nⁱₜ^{fastest}, and the direction dⁱₜ^{fastest} of the motion vector Vⁱₜ^{fastest} with the fastest speed nⁱₜ^{fastest}.

### (Step S1109)

Next, the client 102 uses the shift feature value generation unit 316 to accumulate in chronological order the inclusive feature values 701-t of each acquired frame 400-t.

### (Step S1110)

Next, the client 102 uses the shift feature value generation unit 316 to determine whether the accumulated inclusive feature values 701-t have exceeded the preset number of frames δ. If the accumulated inclusive feature values 701-t have not exceeded the preset number of frames (step S1110: No), then the process returns to step S1100. On the other hand, if the accumulated inclusive feature values 701-t have exceeded the preset number of frames (step S1110: Yes), then the process progresses to step S1111.

### (Step S1111)

Next, the client 102 uses the shift feature value generation unit 316 to couple the inclusive feature values 701-t of the current frame 400-t with the inclusive feature values 701-(t-δ) of past frames that are δ frames prior to the preset number of frames for each of the accumulated inclusive feature values 701-t, thereby generating the shift feature value 702-t.

### (Step S1112)

Next, the client 102 uses the inference unit 317 to feed the shift feature value 702-t generated in step S1111 as input to the inference model acquired from the training unit 307, and infers the state of a subject (person) in the frames 400-(δ+1) to 400-t using the shift feature value group 702.

### (Step S1113)

Next, if the inference result from step S1112 is a predetermined inference result, then the client 102 uses the inference result output unit 317 to transmit the inference result to the terminal 106. The predetermined inference result is, for example, a specific classification class (e.g., "classC" in FIG. 5) in a state for which additional control is necessary. The client 102 may transmit the inference result to the terminal 106 even if the inference result is not a specific classification class.

### (Step S1114)

Next, the client 102 determines whether acquisition of the to-be-analyzed data from the sensor 103 is to be ended, and if acquisition is not to be ended (step S1114: No), then the process returns to step S1100. On the other hand, if ending acquisition (step S1114: Yes), the state estimation process of the client 102 is ended.

Whether or not to end acquisition is set in advance by the manager. If, for example, the manager sets the acquisition start time and the acquisition end time for the frames, the client 102 progresses to step S1100 until the acquisition end time (step S1114: No), and ends the state inference process upon reaching the acquisition end time. Upon reaching the acquisition start time on the following business day, acquisition of the frames is started (step S1100). If determining whether the state inside a train car is normal or abnormal through a surveillance camera in the train car, for example, a setting is made in advance such that acquisition of the frames is started from the operation start time as the acquisition start time for frames and acquisition of the frames is ended at the operation end time as the acquisition end time for the frames such that the state determination function operates during the operation time period of the train.

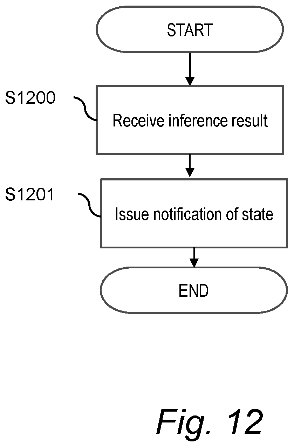

### <FIG. 12, State Notification Process>

FIG. 12 is a flowchart showing an example of state notification process steps by the terminal 106 (state notification device) according to Embodiment 1.

### (Step S1200)

The terminal 106 uses the inference result reception unit 320 to receive the inference result of step S1112 from the client 102.

### (Step S1201)

The terminal 106 executes a specific image display process or audio output process according to the received inference result, thereby notifying the user of the communication terminal of the state of the image data of the current frame.

Thus, according to Embodiment 1, it is possible to accurately infer the state of the space 900 to be examined by detecting the movement trends of persons even in an environment in which persons move in a crowd in the space 900 or an environment with many obstructions.

In the inference process of FIG. 11, the client 102 transmitted the inference result of step S1112 to the terminal 106 (step S1113), but may transmit the inference result to a warning light connected to the network 105 in a manner enabling communication. In this case, the warning light is lit according to the inference result, and indicates a state in which additional control is necessary.

### [Embodiment 2]

Embodiment 2 will be described with primary focus on differences from Embodiment 1. Components in common with Embodiment 1 are assigned the same reference characters and descriptions thereof will be omitted.

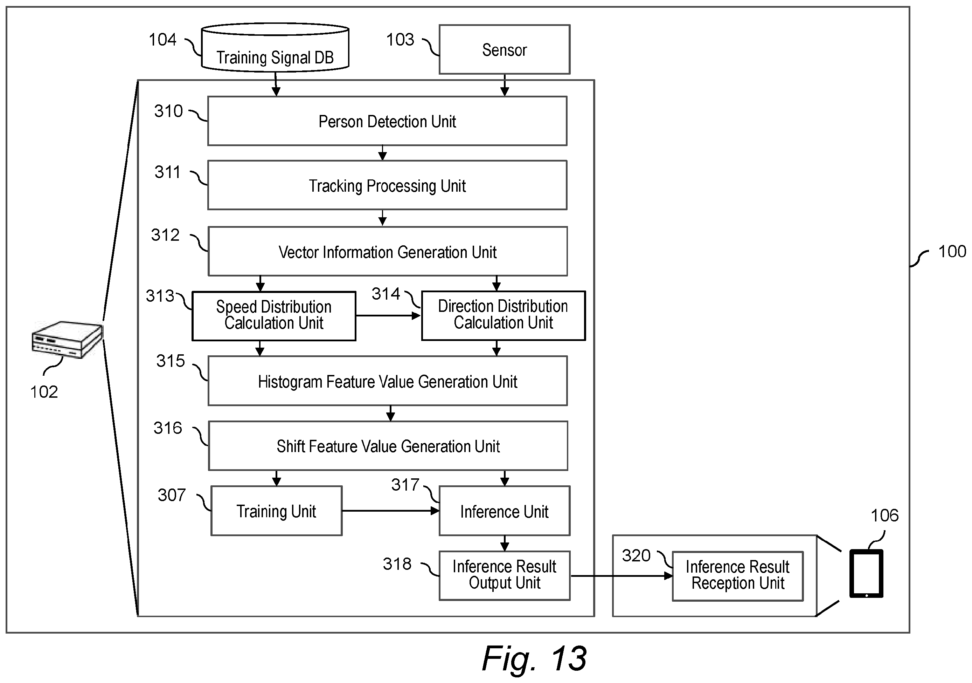

### <FIG. 13, Functional Configuration Example of Analysis System 100>

FIG. 13 is a block diagram showing a functional configuration example of the analysis system 100 according to Embodiment 2. The training process executed by the server 101 (training device) in Embodiment 1 is executed by the client 102 in Embodiment 2.

Thus, in Embodiment 2, the person detection unit 310 also functions as the person detection unit 300, the tracking processing unit 311 also functions as the tracking processing unit 301, the vector information generation unit 312 also functions as the vector information generation unit 302, the speed distribution calculation unit 313 also functions as the speed distribution calculation unit 303, the direction distribution calculation unit 314 also functions as the direction distribution calculation unit 304, the histogram feature value generation unit 315 also functions as the histogram feature value generation unit 305, and the shift feature value generation unit 316 also functions as the shift feature value generation unit 306.

When outputting the position coordinates O of a detected person to the tracking processing unit 311, the person detection unit 310 adds current process information indicating whether the process currently being executed is a training process or an inference process.

The tracking processing unit 311, the vector information generation unit 312, the speed distribution calculation unit 313, the direction distribution calculation unit 314, and the histogram feature value generation unit 315 execute the same process as that of Embodiment 1.

For the inclusive feature values of each acquired frame, the shift feature value generation unit 316 couples an inclusive feature value 701-t of the frame with an inclusive feature value 701-(t-δ) of a past frame that is a prescribed number δ of frames prior to the frame and generates the shift feature value 702-t. If the current process information added by the person detection unit 310 is the training process, the shift feature value generation unit 316 outputs the calculated shift feature value 702-t to the training unit 307, and if the current process information is the inference process, the shift feature value generation unit 316 outputs the shift feature value 702-t to the inference unit 317.

Thus, according to Embodiment 2, by executing the training process in the client 102, it is possible to consolidate the processes that would otherwise be performed in the server 101 and the client 102 respectively, which allows for simplification of the analysis system 100 and execution of standalone state inference.

### [Embodiment 3]

Embodiment 3 will be described with primary focus on differences from Embodiments 1 and 2. The inference accuracy based on the histogram feature value Hₜ with the highest inference accuracy can differ depending on the number of motion vectors 420 of persons detected from the to-be-analyzed data. Thus, the analysis system 100 according to Embodiment 3 can perform inference of the state of the to-be-analyzed data at a higher accuracy by switching the generation method for the histogram feature value Hₜ according to the number of detected motion vectors 420. Components in common with Embodiments 1 and 2 are assigned the same reference characters and descriptions thereof will be omitted.

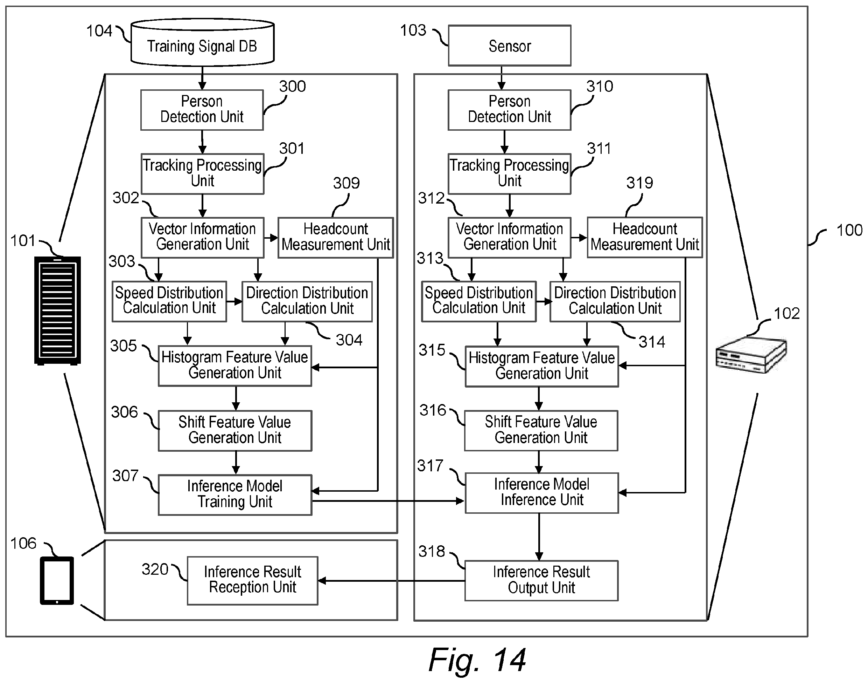

### <FIG. 14, Functional Configuration Example of Analysis System 100>

FIG. 14 is a block diagram showing a functional configuration example of the analysis system 100 according to Embodiment 3. In Embodiment 3, a headcount measurement unit 309 is newly added to the server 101, and a headcount measurement unit 319 is newly added to the client 102.

The vector information generation unit 302 outputs the acquired trajectory ID and the motion vector 420 calculated from the position coordinates O to the headcount measurement unit 309. The vector information generation unit 312 outputs the acquired trajectory ID and the motion vector 420 calculated from the position coordinates O to the headcount measurement unit 319.

The headcount measurement unit 309 measures the number of motion vectors 420 outputted from the vector information generation unit 302 for each piece of training data, and outputs the measured number of motion vectors 420 as the headcount to the histogram feature value generation unit 305 and the training unit 307.

The histogram feature value generation unit 305 uses the speed distribution 501 acquired from the speed distribution calculation unit 303 and the direction distribution 502 acquired from the direction distribution calculation unit 304 to generate the histogram feature value Hₜ. Specifically, the histogram feature value generation unit 305 generates a two-dimensional histogram feature value H2ₜ if the headcount acquired from the headcount measurement unit 309 is greater than a predetermined headcount, and generates a one-dimensional histogram feature value H1ₜ if the headcount is less than or equal to the predetermined headcount.

If the headcount acquired from the headcount measurement unit 309 is greater than the predetermined headcount, the training unit 307 performs training, with the shift feature value 702-t acquired from the shift feature value generation unit 306 as the predictor variable of the inference model corresponding to the two-dimensional histogram feature value H2ₜ. If the headcount acquired from the headcount measurement unit 309 is less than or equal to the predetermined headcount, the training unit 307 performs training, with the shift feature value 702-t acquired from the shift feature value generation unit 306 as the predictor variable of the inference model corresponding to the one-dimensional histogram feature value H1ₜ.

The headcount measurement unit 319 measures the number of motion vectors 420 outputted from the vector information generation unit 312 for each piece of to-be-analyzed data 500, and outputs the measured number of motion vectors 420 as the headcount to the histogram feature value generation unit 315 and the inference unit 317.

The histogram feature value generation unit 315 uses the speed distribution 501 acquired from the speed distribution calculation unit 313 and the direction distribution 502 acquired from the direction distribution calculation unit 314 to generate the histogram feature value Hₜ. Specifically, the histogram feature value generation unit 315 generates a two-dimensional histogram feature value H2ₜ if the headcount acquired from the headcount measurement unit 319 is greater than a predetermined headcount, and generates a one-dimensional histogram feature value H1ₜ if the headcount is less than or equal to the predetermined headcount.

If the headcount acquired from the headcount measurement unit 319 is greater than the predetermined headcount, the inference unit 317 infers the state of the to-be-analyzed data using the inference model corresponding to the two-dimensional histogram feature value H2ₜ. If the headcount acquired from the headcount measurement unit 319 is less than or equal to the predetermined headcount, the inference unit 317 infers the state of the to-be-analyzed data using the inference model corresponding to the one-dimensional histogram feature value H1ₜ.

A bin in the two-dimensional histogram 603 is a product set of a bin of the first one-dimensional histogram 601 and a bin of the second one-dimensional histogram 602, and thus, the bins of the two-dimensional histogram 603 are more finely divided than the bins of the first one-dimensional histogram 601 and the bins of the second one-dimensional histogram 602. Thus, the two-dimensional histogram 603 can more accurately reproduce the state of the site. However, if the acquired headcount is less than or equal to the predetermined headcount and the values are finely subdivided for each bin according to the feature value, then the height of each bin is reduced such as due to an approximate bin having a height of approximately zero, and the histogram feature value ends up being sparse data where the data is scattered. Sparse data includes many zero values with little change in the data, and thus, suitable training cannot be performed on the input data. This is due to the fact that if the data is sparse and there is little change in the data, for example, then the model is susceptible to over-learning with training data in which there is little data change and with approximate zero values.

In one scenario, the bins of a speed n in the first one-dimensional histogram 601 indicating the speed are 0<n≤20, 20<n≤40, 40<n≤60... n>300, and for the two-dimensional histogram 603, the bin of 0<n≤20 is classified as "0<n≤20 and 0<angle≤30," "0<n≤20 and 30<angle≤60," ...and "0<n≤20 and 330<angle≤360" (similarly applies to 20<n≤40...).

In this case, the total headcount of the two-dimensional histogram 603, the total headcount of the first one-dimensional histogram 601, and the total headcount of the second one-dimensional histogram 602 are all the same value and the bins of the two-dimensional histogram 603 are finely divided, and thus, the heights of the bins in the two-dimensional histogram 603 are lower than the first one-dimensional histogram 601 and the second one-dimensional histogram 602.

In the above classification example, in the case of the first one-dimensional histogram 601 indicating the speed, the movement directions of persons falling into each bin (0<n≤20, 20<n≤40, 40<n≤60 ...n>300) are unclear. In the case of the two-dimensional histogram 603, the movement directions of persons falling into each bin ("0<n≤20 and 0<angle≤30," "0<n≤20 and 30<angle≤60," ...and "0<n≤20 and 330<angle≤360") are clear, and thus, it is possible to more accurately reproduce the state of the site.

Thus, if the acquired headcount is less than or equal to a predetermined headcount, then a decrease in inference accuracy is mitigated by performing inference using the one-dimensional histogram feature value H1t based on the first one-dimensional histogram 601 and the second one-dimensional histogram 602, and if the acquired headcount is greater than the predetermined headcount, then the inference accuracy is improved by performing inference using the two-dimensional histogram feature value H2ₜ.

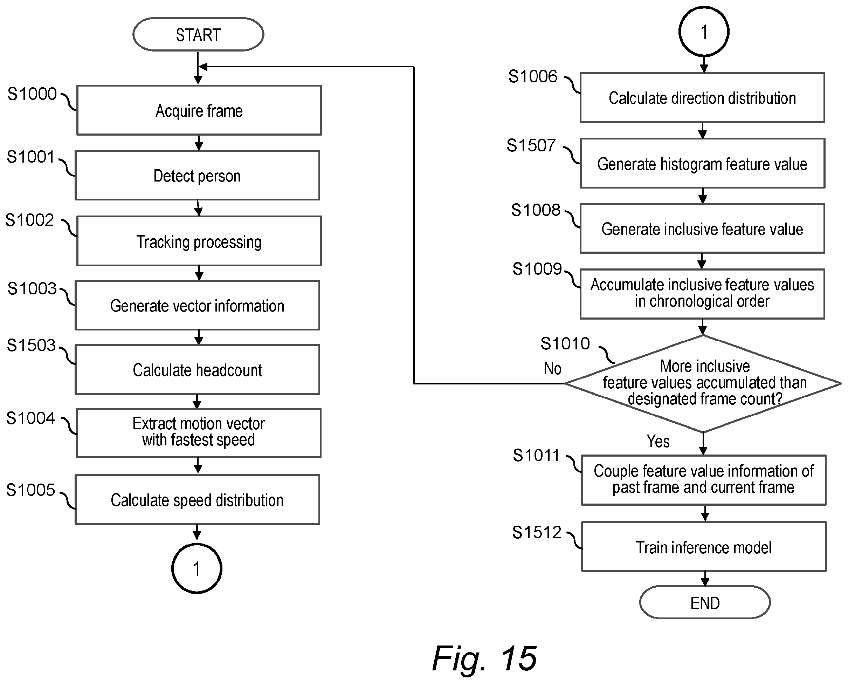

### <FIG. 15, Training Device>

FIG. 15 is a flowchart showing an example of detailed process steps of a training process by the server 101 (training device) according to Embodiment 3. After step S1003, the server 101 uses the headcount measurement unit 309 to calculate the number of motion vectors 420 acquired from the vector information generation unit 302 as the headcount (step S1503). Then, the process progresses to step S1004.

After step S1006, the server 101 uses the histogram feature value generation unit 305 to generate a two-dimensional histogram feature value H2ₜ if the headcount acquired from the headcount measurement unit 309 is greater than a predetermined headcount, and generates a one-dimensional histogram feature value H1ₜ if the headcount is less than or equal to the predetermined headcount (step S1507). Then, the process progresses to step S1008.

After step S1011, the server 101 uses the training unit 307 to set the state constituting the training signal to the response variable. The server 101 uses the training unit 307 to set the shift feature value 702-t as the predictor variable of the inference model corresponding to the two-dimensional histogram feature value H2ₜ if the headcount acquired from the headcount measurement unit 309 is greater than the predetermined headcount, and sets the shift feature value 702-t as the predictor variable for the inference model corresponding to the one-dimensional histogram feature value H1ₜ if the headcount is less than or equal to the predetermined headcount. The server 101 uses the training unit 307 to perform training using the set response variable and predictor variable, and generates through machine learning an inference model that infers the state of subjects (persons) in the frames 400-(δ+1) to 400-t using the shift feature value group 702 (step S1012).

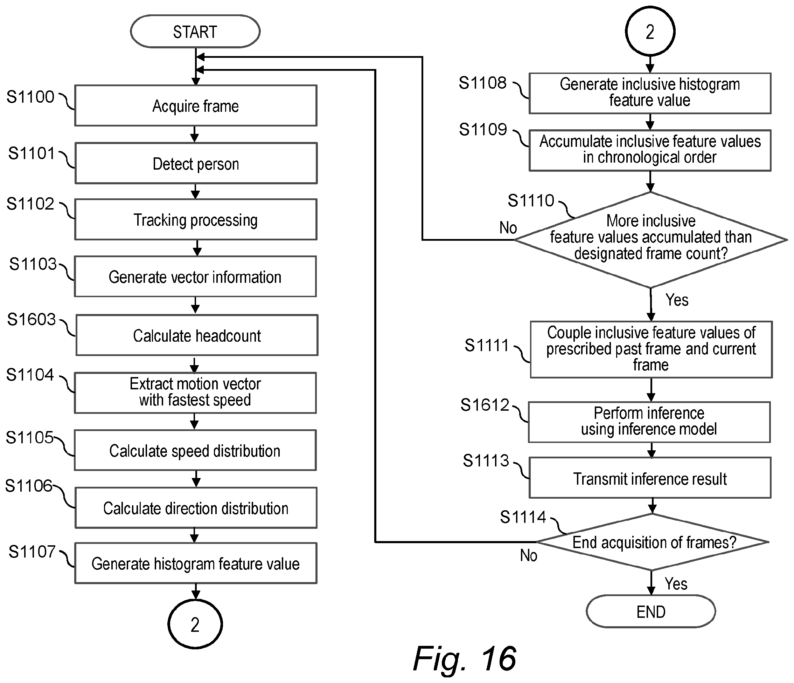

### <FIG. 16, Inference Device>

FIG. 16 is a flowchart showing an example of state inference process steps by the client 102 (inference device) according to Embodiment 3. After step S1103, the client 102 uses the headcount measurement unit 319 to calculate the number of motion vectors 420 acquired from the vector information generation unit 312 as the headcount (step S1603).

After step S1111, if the headcount acquired from the headcount measurement unit 309 is greater than the predetermined headcount, the client 102 uses the inference unit 317 to input the shift feature value 702-t including the two-dimensional histogram feature value H2t to the inference model, and if the headcount is less than or equal to the predetermined headcount, then the client 102 uses the inference unit 317 to input the shift feature value 702-t including the one-dimensional histogram feature value H1t to the inference model, thereby inferring the state of subjects (persons) in the frames 400-(δ+1) to 400-t using the shift feature value group 702 (step S1612).

Thus, according to Embodiment 3, by generating an inference model by switching the generated histogram feature value Ht according to the number of motion vectors 420 of the detected persons, and by switching inference models according to the number of motion vectors 420 of the detected persons, it is possible to realize state inference with high accuracy according to the detected headcount.

### [Embodiment 4]

Embodiment 4 will be described with primary focus on differences from Embodiments 1, 2, and 3. Components in common with Embodiments 1 to 3 are assigned the same reference characters and descriptions thereof will be omitted.

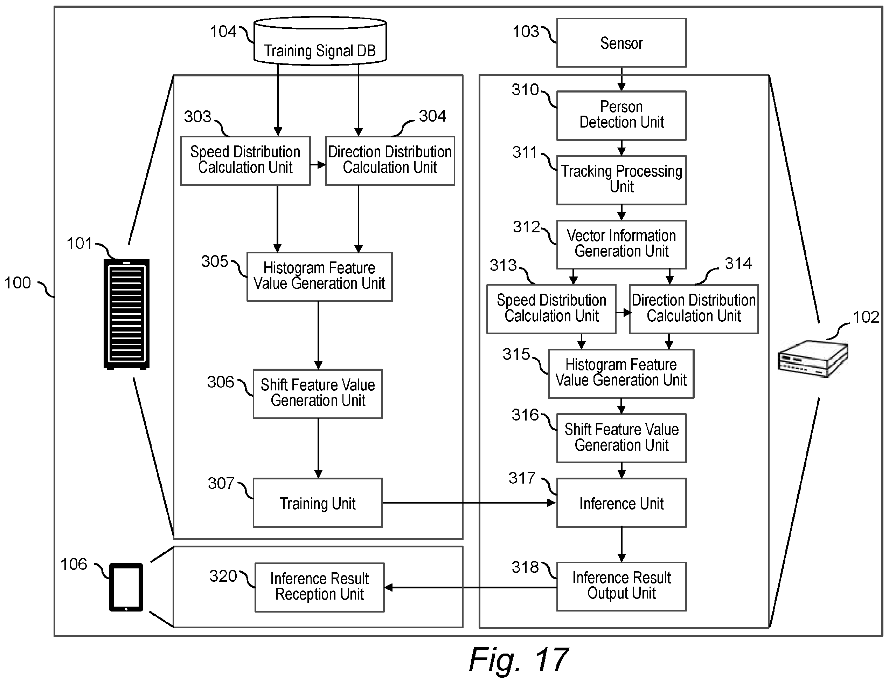

### <FIG. 17, Functional Configuration Example of Analysis System 100>

FIG. 17 is a block diagram showing a functional configuration example of the analysis system 100 according to Embodiment 4. In Embodiment 4, the server 101 (training device) does not use the person detection unit 300, the tracking processing unit 301, or the vector information generation unit 302. Also, the chronological training data outputted from the training signal DB 104 to the speed distribution calculation unit 303 and the direction distribution calculation unit 304 include the motion vectors 420 of the persons at each time.

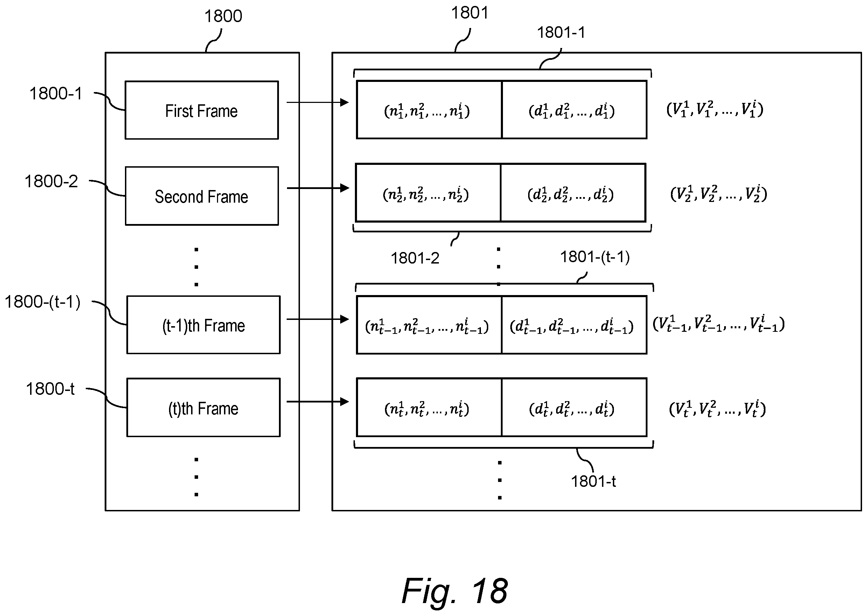

### <FIG. 18, Chronological Training Data>

FIG. 18 is a descriptive view showing an example of chronological training data outputted from the training signal DB 104. A chronological image data group 1800 is constituted of t frames 1800-1 to 1800-t.

The chronological training data group 1801 is a collection of training data 1801-1 to 1801-t outputted from the training signal DB 104. The training data 1801-t constitutes a motion vector collection of times t (V¹ₜ, V²ₜ...Vⁱₜ) by a speed vector collection of times t (n¹ₜ, n²ₜ...nⁱₜ) and a direction vector collection of times t (d¹ₜ, d²ₜ...dⁱₜ). In the chronological training data group 1801, the training data 1801-t of each time t is information derived from the frame 1800-t of the same time t in the chronological image data group 1800. For example, the motion vector collection (V¹ₜ, V²ₜ...Vⁱₜ) included in the (t)th training data 1801-t are the motion vectors V¹ₜ, V²ₜ...Vⁱₜ of persons (trajectory IDs 1 to i) in the (t)th frame 1800-t of the chronological image data group 1800.

Thus, according to Embodiment 4, it is possible to suppress the training data size and shorten the training time by using the training data 1801-t that is only numerical information instead of the image data (frame 1800-t).

### [Embodiment 5]

Embodiment 5 will be described with primary focus on differences from Embodiments 1 to 4. Components in common with Embodiments 1 to 4 are assigned the same reference characters and descriptions thereof will be omitted.

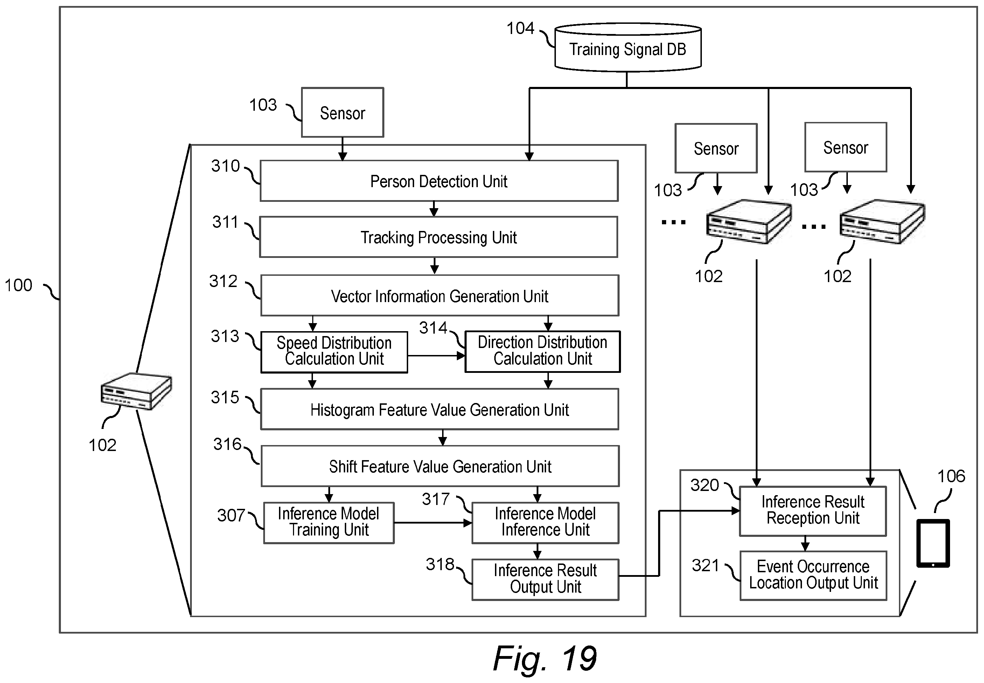

### <FIG. 19, Functional Configuration Example of Analysis System 100>

FIG. 19 is a block diagram showing a functional configuration example of the analysis system 100 according to Embodiment 5. In Embodiment 5, an event occurrence location output unit 321 is newly added to the terminal 106. The inference result reception unit 320 indicates a state in which additional control is necessary according to inference results received from one or more clients 102, and outputs the inference results and the position information of the clients 102 from which the inference results originate to the event occurrence location output unit 321.

Next, according to the inference results and position information of the plurality of clients 102 acquired from the inference result reception unit 320, the event occurrence location output unit 321 outputs in a displayable manner the state in which additional control is necessary and the positions from which the inference results were derived.

Thus, according to Embodiment 5, if collectively processing inference results and position information from the plurality of clients 102, it is possible to ascertain the occurrence location of the state where additional control is necessary, and to rapidly implement the additional control.

### [Embodiment 6]

Embodiment 6 will be described while primarily focusing on differences from Embodiments 1 to 5. Components in common with Embodiments 1 to 5 are assigned the same reference characters and descriptions thereof will be omitted.

In Embodiment 6, the inclusive feature value generated from the histogram feature value generation unit 305 and the histogram feature value generation unit 315 can include other information as feature values in addition to the fastest speed nⁱₜ^{fastest}, the direction dⁱₜ^{fastest} of the motion vector Vⁱₜ^{fastest} with the fastest speed nⁱₜ^{fastest}, and the histogram feature value Hₜ. Here, the other information includes the position coordinates of the detected person, the acceleration, which is the derivative of the speed nⁱₜ of the motion vector Vⁱₜ, the distribution or standard deviation of the directions dⁱₜ of the motion vectors Vⁱₜ at the respective times t, and the like, for example.

The training unit 307 trains the inference model, with other information being included as the predictor variable in the shift feature value 702-t and the occurrence location of the state and the occurrence time being the response variables. The inference unit 317 inputs the shift feature value 702-t including the other information to the inference model, thereby inferring the state, the occurrence location of the state, and the occurrence time.

Thus, according to Embodiment 6, information such as the acceleration of the motion vector Vⁱₜ and the position coordinates of detected persons are inputted to the inference model, thereby allowing for inference of the state, and accurate inference of the occurrence location of the state and the occurrence time.

### [Embodiment 7]

Embodiment 7 will be described while primarily focusing on differences from Embodiments 1 to 6. Components in common with Embodiments 1 to 6 are assigned the same reference characters and descriptions thereof will be omitted.

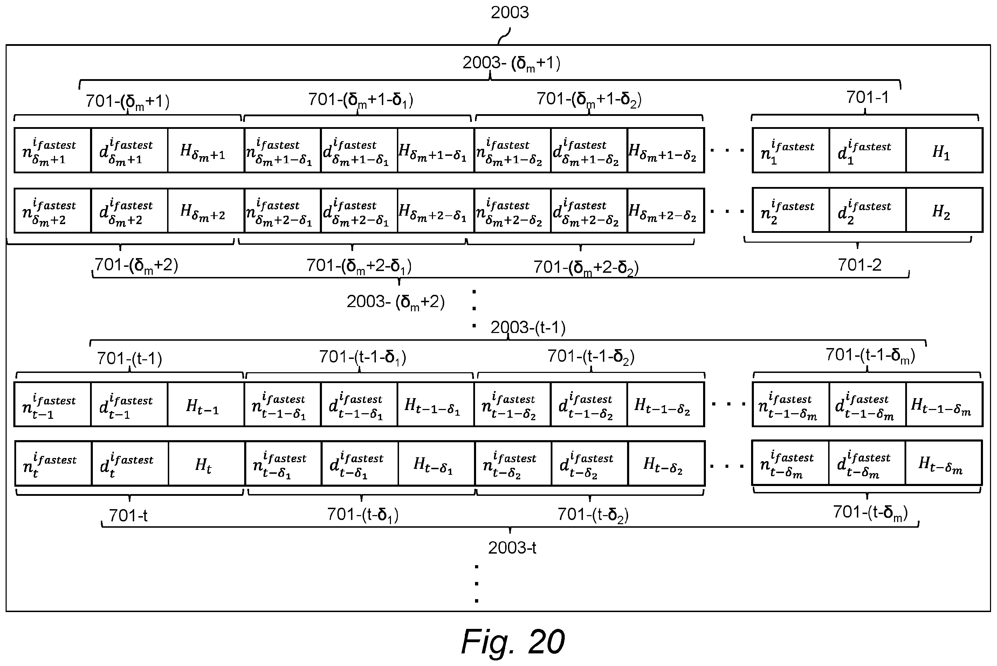

### <FIG. 20, Shift Feature Value>

FIG. 20 is a descriptive drawing showing one example of a shift feature value group according to Embodiment 7. In Embodiment 7, for the inclusive feature value 701-t of each acquired frame, the shift feature value generation unit 306 and the shift feature value generation unit 316 couple the inclusive feature value 701-t of the current frame 400-t with the inclusive feature values 701-(t-δ₁) to 701-(t-δₘ) of a plurality of past frames (δ₁ frames prior to current frame, δ₂ frames prior to current frame... δₘ frames prior to current frame), and outputs the coupled inclusive feature values as a shift feature value 2003-t.

δ₁ to δₘ are integers of 1 or greater satisfying δ₁<δ₂< ... <δₘ, and m is an integer of 1 or greater.

There is no past frame that is δₘ prior for frames 400-1 to 400-δₘ where t is equal to 1 to δₘ, and thus, the generation process for the shift feature value 2003-t is executed for the (δₘ₊₁)th frame 400-δₘ₊₁ onward.

Thus, according to Embodiment 7, it is possible to realize high accuracy state inference using the feature values of a plurality of past frames.

In Embodiments 1 to 7 described above, the normal state and the abnormal state shown in FIG. 9 are assumed, but the combination of normal state and abnormal state is not limited to this assumption. For example, the normal state may be one in which persons move in a specific direction, and the abnormal state may be one in which the movement speed of persons is slower than that of the normal state, with the movement direction being random. Specifically, there may be a case in which, where a crowd moving in a fixed direction towards a venue in an outdoor event is a normal state, the crowd enters a state of confusion with the movement speed of persons being slowed due to congestion or rioting.

In such a case, the inclusive feature value 701-t generated from the (t)th frame 400-t may be constituted of the slowest speed nⁱₜ^{slowest}, the direction dⁱₜ^{slowest} of the motion vector Vⁱₜ^{slowest} with the slowest speed nⁱₜ^{slowest}, and the histogram feature value Hₜ. In an abnormal state, the inclusive feature value 701-t may be generated with a specific speed nⁱₜ and a direction dⁱₜ in the specific speed differing from those of the normal state, without being limited to the fastest speed nⁱₜ^{fastest} and the slowest speed nⁱₜ^{slowest}.

### [Embodiment 8]

Embodiment 8 will be described with primary focus on differences from Embodiments 1 to 7. Components in common with Embodiments 1 to 7 are assigned the same reference characters and descriptions thereof will be omitted. Embodiment 8 is an example in which a state of whether or not a person is looking in a specific direction (e.g., signage at top of opening/closing door of train car) is learned and inferred. This inference model uses 3-dimensional position information of the signage to be viewed.

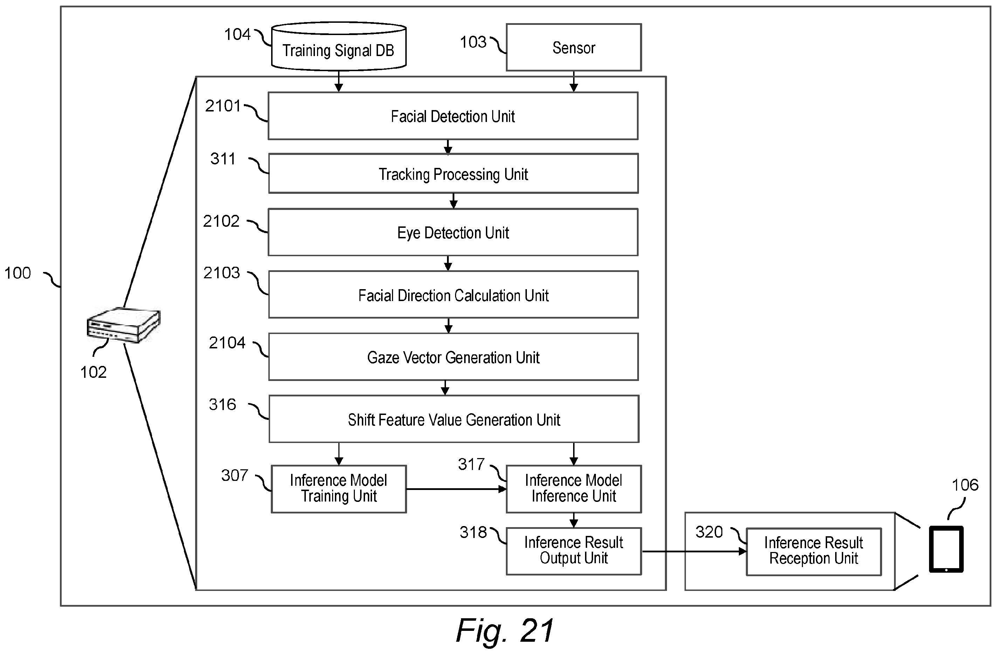

### <FIG. 21, Functional Configuration Example of Analysis System 100>

FIG. 21 is a block diagram showing a functional configuration example of the analysis system 100 according to Embodiment 8. In Embodiment 8, the person detection unit 310, the vector information generation unit 302, the speed distribution calculation unit 313, the direction distribution calculation unit 314, and the histogram feature value generation unit 315 are not used in the client 102. On the other hand, a facial detection unit 2101, an eye detection unit 2102, a facial direction calculation unit 2103, and a gaze vector generation unit 2104 are newly added to the client 102.

The facial detection unit 2101 generates landmarks of a face for an acquired frame, and outputs the frame and the landmarks of the face to the tracking processing unit 311. Landmarks are feature points for extracting features of a face such as the positions of the eyes and nose. When outputting the frame and the landmarks of the face to the tracking processing unit 311, the facial detection unit 2101 adds current process information indicating whether the process currently being executed is a training process or an inference process.

The tracking processing unit 311 generates a trajectory ID for the landmarks of the face acquired from the facial detection unit 2101. The trajectory ID corresponds to the 3-dimensional position of the face. If the landmarks of the face are derived from the same person among acquired frames, the tracking processing unit 311 sets the same value to the trajectory ID. The tracking processing unit 311 outputs, to the eye detection unit 2102, trajectory ID and the landmarks of the face to which the trajectory ID is assigned.

The eye detection unit 2102 uses the landmarks of the face acquired from the tracking processing unit 311 to identify the positions of the eyes of the person from the frame, and outputs the trajectory ID, the frame, and the image data of the eyes of the person to the facial direction calculation unit 2103. The image data of the eyes is used for identifying whether the eyes are open or closed. That is, if the eyes are open, it is determined that the person is viewing something, whereas if the eyes are closed, it is determined that the person is not viewing anything. Also, the image data of the eyes is used for identifying the positions of the irises if the eyes are open. The positions of the irises are used in generating a gaze vector.

The facial direction calculation unit 2103 calculates the direction that the face is oriented using the frame acquired from the facial detection unit 2101, and outputs the direction that the face is oriented, the image data of the eyes, and the trajectory ID to the gaze vector generation unit 2104. The orientation of the face is movement information indicating the direction in which the face is moving, and is used in generating the gaze vector together with the positions of the irises.

The gaze vector generation unit 2104 uses the direction that the face is oriented and the image data of the eyes of the person acquired from the facial direction calculation unit 2103 to generate a gaze vector indicating the direction of the gaze, and outputs the gaze vector, the direction that the face is oriented, the image data of the eyes, and the landmarks to the shift feature value generation unit 316 as inclusive feature values of each frame.

The shift feature value generation unit 316 generates a shift feature value by coupling the inclusive feature value of the current frame with the inclusive feature value of a past frame for the gaze vector, the direction that the face is oriented, the image data of the eyes of the person, and the landmarks acquired from the gaze vector generation unit 2104. If the current process information is the training process, the shift feature value generation unit 316 outputs the calculated shift feature value to the training unit 307, and if the current process information is the inference process, the shift feature value generation unit 316 outputs the shift feature value to the inference unit 317.

The training unit 307 performs training, with the acquired shift feature value group 702, which are the shift feature value at the time (δ+1) to the shift feature value at the time t, as the predictor variable, and the state of the training data that is the frames 400-(δ+1) to 400-t as the response variable, and generates through machine learning an inference model that infers the state of subjects (persons) in the frames 400-(δ+1) to 400-t (whether the person is looking in a specific direction (e.g., the direction of signage)) using the shift feature value group 702. The training unit 307 outputs the inference model generated by training to the inference unit 317.

The inference unit 317 inputs, to the inference model acquired from the training unit 307, the acquired shift feature value group 702 that includes the shift feature value at the time (δ+1) to the shift feature value at the time t, and infers the state of a subject (person) in the frames 400-(δ+1) to 400-t (whether the person is looking in a specific direction (e.g., the direction of signage)) using the shift feature value group 702. The inference unit 317 outputs the inference result to the inference result output unit 318.

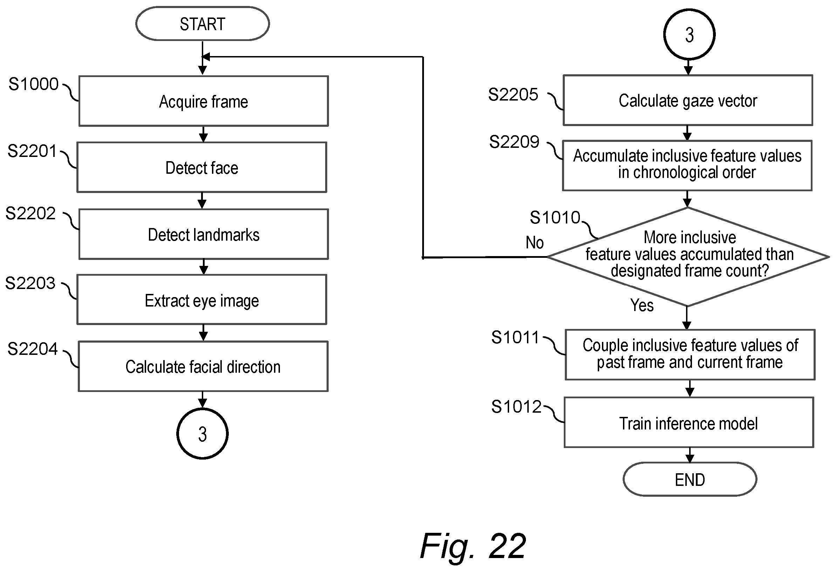

### <FIG. 22, Learning Process>

FIG. 22 is a flowchart showing an example of detailed process steps of a training process by the client 102 (training device) according to Embodiment 8.

### (Step S2201)

After step S1000, the client 102 detects the face of a person using the facial detection unit 2101.

### (Step S2202)

After step S2201, the client 102 detects landmarks of the face of the detected person using the facial detection unit 2101.

### (Step S2203)

After step S2202, the client 102 uses the eye detection unit 2102 to extract the image data of the eyes of the person using the acquired landmarks.

### (Step S2204)

After step S2203, the client 102 calculates the direction that the face is oriented from the acquired image data of the eyes using the facial direction calculation unit 2103.

### (Step S2205)

After step S2204, the client 102 uses a gaze vector calculation unit 333 to generate a gaze vector indicating the direction of the gaze using the acquired direction that the face is oriented and the image data of the eyes of the person.

### (Step S2209)

After step S2205, the client 102 uses the shift feature value generation unit 316 to accumulate the gaze vector, the direction that the face is oriented, the image data of the eyes of the person, and the landmarks of the face in the frame, in chronological order as inclusive feature values of the frame.

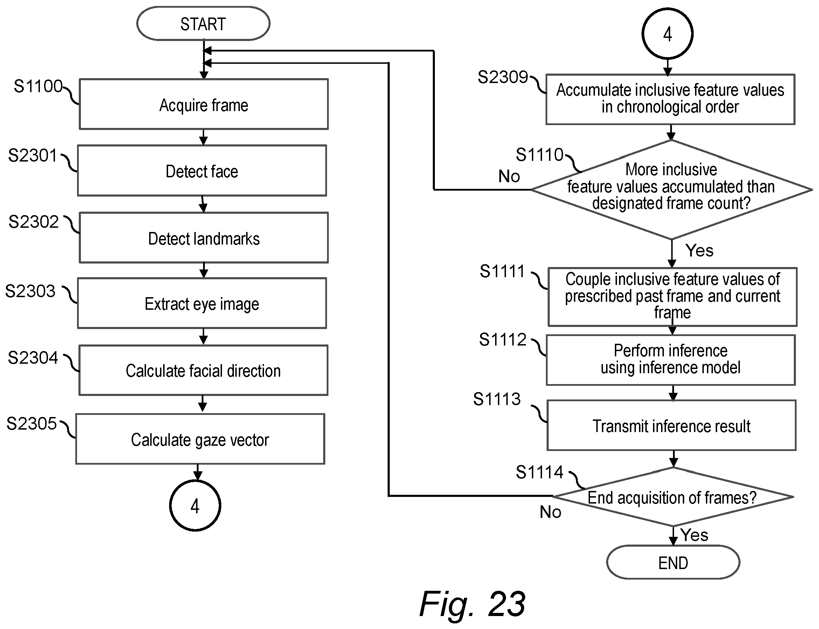

### <FIG. 23, Inference Process>

FIG. 23 is a flowchart showing an example of state inference process steps by the client 102 (inference device) according to Embodiment 8.

### (Step S2301)

After step S1100, the client 102 detects the face of the person using the facial detection unit 2101.

### (Step S2302)

After step S2301, the client 102 detects landmarks of the face of the detected person using the facial detection unit 2101.

### (Step S2303)

After step S2302, the client 102 uses the eye detection unit 2102 to extract the image data of the eyes of the person using the acquired landmarks.

### (Step S2304)

After step S2303, the client 102 calculates the direction that the face is oriented from the acquired image data using the facial direction calculation unit 2103.

### (Step S2305)

After step S2304, the client 102 uses the gaze vector calculation unit 333 to generate a gaze vector indicating the direction of the gaze using the acquired direction that the face is oriented and the image data of the eyes of the person.

### (Step S2309)

After step S2305, the client 102 uses the shift feature value generation unit 316 to accumulate the gaze vector, the direction that the face is oriented, the image data of the eyes of the person, and the landmarks of the face in each frame, in chronological order as inclusive feature values of each frame.

Thus, according to Embodiment 8, it is possible to infer whether a person who is a subject is viewing signage, using information such as the gaze vector.

Thus, according to Embodiments 1 to 8, it is possible to improve the training accuracy and inference accuracy of an inference model that infers the state of a space.

Additionally, the analysis system according to Embodiments 1 to 8 can also have the following configurations (1) to (11).
(1) An analysis system 100, comprising: a processor 201 that executes a program; and a storage device 202 that stores the program, wherein the processor 201 executes: an acquisition process of repeatedly acquiring an inclusive feature value (701-1 to 701-t) that includes information pertaining to movement of a to-be-inferred subject (person) and information pertaining to a direction of the to-be-inferred subject; a generation process by which, among a plurality of the inclusive feature values (701-1 to 701-t) acquired repeatedly during the acquisition process, an inclusive feature value (701-(δ+1)) at a first time (δ+1) to an inclusive feature value (701-t) at a second time (t) are each coupled with an inclusive feature value 701-(t-δ) from a third time that is a prescribed time (δ) prior, thereby generating a shift feature value group (702) including the shift feature value (702-(δ+1)) at the first time (δ+1) to the shift feature value (702-t) at the second time (t); and an output process of outputting the shift feature value group (702) generated by the generation process to an inference model that infers states of the to-be-inferred subject during a period from the first time (δ+1) to the second time (t).

As a result, when training, the inference model can be trained with the shift feature value group (702) as the predictor variable and the state group including the state at the first time (δ+1) to the state at the second time (t) being the response variable. Thus, it is possible to improve the training accuracy of an inference model that infers the state.

Also, when performing inference, the state in the period from the first time (δ+1) to the second time (t) can be inferred by inputting the shift feature value group (702) to the inference model. Thus, it is possible to improve the inference accuracy of an inference model that infers the state.

(2) The analysis system 100 according to (1), wherein the information pertaining to the movement of the to-be-inferred subject includes a movement speed of the to-be-inferred subject, and wherein the information pertaining to the direction of the to-be-inferred subject includes a movement direction of the to-be-inferred subject.

As a result, it is possible to perform training and inference of states while taking into consideration the movement trends of items to be subjected to inference.

(3) The analysis system 100 according to (2), wherein the movement speed is a specific movement speed of a specific to-be-inferred subject among a plurality of the movement speeds of a plurality of the to-be-inferred subjects, and wherein the movement direction is a specific movement direction in which the specific to-be-inferred subject moves at the specific movement speed.

As a result, it is possible to perform training and inference of states while taking into consideration the specific movement direction at which the subject moves at a specific movement speed.

(4) The analysis system 100 according to (3), wherein the specific movement speed is a fastest movement speed among the plurality of movement speeds, and wherein the specific movement direction is a movement direction in which the specific to-be-inferred subject moves at the fastest movement speed.

As a result, it is possible to perform training and inference of states while taking into consideration the movement direction at which the subject moves at the fastest movement speed.

(5) The analysis system 100 according to (3), wherein the information pertaining to the movement of the to-be-inferred subject is a first one-dimensional histogram indicating a headcount for each of the movement speeds, wherein the information pertaining to the direction of the to-be-inferred subject is a second one-dimensional histogram indicating a headcount for each of the movement directions, and wherein, in the acquisition process, the processor acquires the specific movement speed, the specific movement direction, and the first one-dimensional histogram and the second one-dimensional histogram, as the inclusive feature values.

As a result, it is possible to perform training and inference of states while taking into consideration the headcount distribution for the movement speed and the headcount distribution for the movement direction.

(6) The analysis system 100 according to (3), wherein the information pertaining to the movement of the to-be-inferred subject is a first one-dimensional histogram indicating a headcount for each of the movement speeds, wherein the information pertaining to the direction of the to-be-inferred subject is a second one-dimensional histogram indicating a headcount for each of the movement directions, and wherein, in the acquisition process, the processor acquires the specific movement speed, the specific movement direction, and a two-dimensional histogram that combines the first one-dimensional histogram and the second one-dimensional histogram, as the inclusive feature values.

As a result, it is possible to perform training and inference of states while taking into consideration the headcount distribution for the movement speed and the movement direction.

(7) The analysis system 100 according to (2), wherein the information pertaining to the movement of the to-be-inferred subject is a first one-dimensional histogram indicating a headcount for each of the movement speeds, wherein the information pertaining to the direction of the to-be-inferred subject is a second one-dimensional histogram indicating a headcount for each of the movement directions, wherein the processor executes a determination process of determining whether to generate a two-dimensional histogram that combines the first one-dimensional histogram and the second one-dimensional histogram on the basis of a count of motion vectors indicating movement by the to-be-inferred subject in the movement direction at the movement speed, and wherein, in the acquisition process, if it is determined in the determination process that the two-dimensional histogram is not to be generated, then the processor 201 acquires the specific movement speed, the specific movement direction, and the first one-dimensional histogram and the second one-dimensional histogram as the inclusive feature values, and if it is determined in the determination process that the two-dimensional histogram is to be generated, then the processor acquires the specific movement speed, the specific movement direction, and the two-dimensional histogram as inclusive feature values.

As a result, it is possible to improve the training accuracy and the inference accuracy for the states.

(8) The analysis system 100 according to (1), wherein, in the generation process, the processor couples inclusive feature values from a first time to a second time, among the plurality of inclusive feature values, with inclusive feature values from plurality of third times that are a plurality of prescribed times prior, thereby generating a shift feature value group including shift feature values from the first time to the second time.

As a result, it is possible to realize high accuracy state inference using the feature values of a plurality of past frames.

(9) The analysis system 100 according to (1), wherein the information pertaining to the movement of the to-be-inferred subject includes information pertaining to movement of a face of the to-be-inferred subject, and wherein the information pertaining to the direction of the to-be-inferred subject includes a gaze direction of the to-be-inferred subject.

As a result, it is possible to perform training and inference of states while taking into consideration the gaze trend in which the item to be inferred is whether the subject is viewing the item to be viewed.

(10) The analysis system 100 according to (1), wherein the processor 201 executes a training process of training the inference model with the shift feature value group (702) as a predictor variable and a state group including the state at the first time (δ+1) to the second time (t) as a response variable.

As a result, it is possible to improve the training accuracy of an inference model that infers the state.

(11) The analysis system 100 according to (1), wherein the processor 201 executes an inference process of inferring the state in the period from the first time (δ+1) to the second time (t) by inputting the shift feature value group (702) to the inference model.

As a result, it is possible to improve the inference accuracy of an inference model that infers the state.

The present invention is not limited to the aforementioned embodiments, and various modification examples within the spirit of the affixed claims and configurations equivalent thereto are included. The embodiments above were described in detail in order to explain the present invention in an easy to understand manner, but the present invention is not necessarily limited to including all configurations described, for example. A portion of the configuration of one embodiment may be replaced with the configuration of another embodiment. Also, a portion of the configuration of one embodiment may be added to the configuration of another embodiment. Furthermore, other configurations may be added or removed, or replace portions of the configurations of the respective embodiments.

Additionally, the respective configurations, functions, processing units, processing means, and the like mentioned above can be realized by hardware such as by designing an integrated circuit, for example, or realized by software such as by the processor 201 interpreting programs that realize the respective functions and executing such programs.

Programs, tables, files, and the like that realize the respective functions can be stored in a storage device such as memory, a hard disk, or a solid state drive (SSD), or in a recording medium such as an IC (integrated circuit) card, an SD card, or a DVD (digital versatile disc).

Control lines and data lines regarded as necessary for explanation have been described, and not all control lines and data lines required for installation have necessarily been shown. In reality, almost all components can be thought of as connected to each other.

## Claims

1. An analysis system, comprising:
a processor that executes a program; and
a storage device configured to store the program,
wherein the processor executes:
an acquisition process of repeatedly acquiring an inclusive feature value that includes information pertaining to movement of a to-be-inferred subject and information pertaining to a direction of the to-be-inferred subject;
a generation process by which, among a plurality of the inclusive feature values acquired repeatedly during the acquisition process, inclusive feature values from a first time to a second time are each coupled with an inclusive feature value from a third time that is a prescribed time prior, thereby generating a shift feature value group including shift feature values from the first time to the second time; and
an output process of outputting the shift feature value group generated by the generation process to an inference model that infers states of the to-be-inferred subject during a period from the first time to the second time.

2. The analysis system according to claim 1,
wherein the information pertaining to the movement of the to-be-inferred subject includes a movement speed of the to-be-inferred subject, and
wherein the information pertaining to the direction of the to-be-inferred subject includes a movement direction of the to-be-inferred subject.

3. The analysis system according to claim 2,
wherein the movement speed is a specific movement speed of a specific to-be-inferred subject among a plurality of the movement speeds of a plurality of the to-be-inferred subjects, and
wherein the movement direction is a specific movement direction in which the specific to-be-inferred subject moves at the specific movement speed.

4. The analysis system according to claim 3,
wherein the specific movement speed is a fastest movement speed among the plurality of movement speeds, and
wherein the specific movement direction is a movement direction in which the specific to-be-inferred subject moves at the fastest movement speed.

5. The analysis system according to claim 3,
wherein the information pertaining to the movement of the to-be-inferred subject is a first one-dimensional histogram indicating a headcount for each of the movement speeds,
wherein the information pertaining to the direction of the to-be-inferred subject is a second one-dimensional histogram indicating a headcount for each of the movement directions, and
wherein, in the acquisition process, the processor acquires the specific movement speed, the specific movement direction, and the first one-dimensional histogram and the second one-dimensional histogram, as the inclusive feature values.

6. The analysis system according to claim 3,
wherein the information pertaining to the movement of the to-be-inferred subject is a first one-dimensional histogram indicating a headcount for each of the movement speeds,
wherein the information pertaining to the direction of the to-be-inferred subject is a second one-dimensional histogram indicating a headcount for each of the movement directions, and
wherein, in the acquisition process, the processor acquires the specific movement speed, the specific movement direction, and a two-dimensional histogram that combines the first one-dimensional histogram and the second one-dimensional histogram, as the inclusive feature values.

7. The analysis system according to claim 3,
wherein the information pertaining to the movement of the to-be-inferred subject is a first one-dimensional histogram indicating a headcount for each of the movement speeds,
wherein the information pertaining to the direction of the to-be-inferred subject is a second one-dimensional histogram indicating a headcount for each of the movement directions,
wherein the processor
executes a determination process of determining whether to generate a two-dimensional histogram that combines the first one-dimensional histogram and the second one-dimensional histogram on the basis of a count of motion vectors indicating movement by the to-be-inferred subject in the movement direction at the movement speed, and
wherein, in the acquisition process, if it is determined in the determination process that the two-dimensional histogram is not to be generated, then the processor acquires the specific movement speed, the specific movement direction, and the first one-dimensional histogram and the second one-dimensional histogram as the inclusive feature values, and if it is determined in the determination process that the two-dimensional histogram is to be generated, then the processor acquires the specific movement speed, the specific movement direction, and the two-dimensional histogram as inclusive feature values.

8. The analysis system according to claim 1,
wherein, in the generation process, the processor couples inclusive feature values from a first time to a second time, among the plurality of inclusive feature values, with inclusive feature values from plurality of third times that are a plurality of prescribed times prior, thereby generating a shift feature value group including shift feature values from the first time to the second time.

9. The analysis system according to claim 1,
wherein the information pertaining to the movement of the to-be-inferred subject includes information pertaining to movement of a face of the to-be-inferred subject, and
wherein the information pertaining to the direction of the to-be-inferred subject includes a gaze direction of the to-be-inferred subject.

10. The analysis system according to claim 1,
wherein the processor executes:
a training process of training the inference model with the shift feature value group as a predictor variable and a state group including the states from the first time to the second time as a response variable.

11. An analysis program that causes a processor to execute:
an acquisition process of repeatedly acquiring an inclusive feature value that includes information pertaining to movement of a to-be-inferred subject and information pertaining to a direction of the to-be-inferred subject;
a generation process by which, among a plurality of the inclusive feature values acquired repeatedly during the acquisition process, inclusive feature values from a first time to a second time are each coupled with an inclusive feature value from a third time that is a prescribed time prior, thereby generating a shift feature value group including shift feature values from the first time to the second time; and
an output process of outputting the shift feature value group generated by the generation process to an inference model that infers states of the to-be-inferred subject during a period from the first time to the second time.
